# EUROPEAN PATENT APPLICATION

(11) **EP 2 743 869 A1**
(43) Date of publication of application: **18.06.2014**
(21) Application number: 13306543.3
(22) Date of filing: 12.11.2013
(51) Int. Cl.: G06Q 10/02, G06Q 50/14

(54) **Event management systems**

(30) Priority: 14.12.2012 US 201261737436 P
(71) Applicant: Amadeus, 06410 Biot (FR)
(72) Inventor: Bellers, Bart, 2531 VREMDE (BE); Francois, Melanie, 1785 Brussegem (BE); de Bruijn, Thomas, 6674 HB Herveld (NL); Paris, Cedric, 06300 Nice (FR)
(74) Representative: Gevers France

(57) **Abstract**

Described herein is an event management system which is implemented on a hosted platform (2100). The hosted platform comprising a front end portal (2110) including at least one user interface; an administrative portal (2120) through which third parties access the hosted platform (2100); at least a search engine (2170) interfacing with said front end portal (2110) for carrying out searches in accordance with parameters input by a user through the front end portal (2110); a plurality of modules (2130, 2140, 2150, 2160) each comprising an application associated with event management; and a back end (2180, 2190, 2200) interfacing with said search engine (2170) and each module (2130, 2140, 2150, 2160) by way of a connection hub (2180) to provide application integration.

## Description

### Field of the Invention

The present invention relates to event management systems for managing events, such as, for example meetings, and is more particularly, although not exclusively, concerned with an integrated management system which allows large or multi-national corporations to have access to all aspects of travel management through a single platform.

### Background to the Invention

In the context of business travel, scheduling a corporate event typically requires an event organizer to engage in multiple communications with a plurality of event participants. These communications may include the event organizer proposing a time and place for the event, as well as providing information regarding the type of event (e.g., a meeting). Typically, the event organizer will be located where the event is to occur, but the event organizer may also propose events at off-site locations. Event planning is normally an iterative process in that various modes of communication, such as letters, e-mails, and phone calls, are exchanged between the event organizer and each participant to determine details for the event so that the event accommodates the needs and/or desires of all participants

After a date, time, and place are established for the event, each participant that is located remotely from the event may then be required to make travel arrangements, such as a flight, hotel room, and rental car, to attend the event. Thus, scheduling the event may result in a separate research and booking processes being carried out by each participant. In addition, after the meeting or event is held, expense claims for each participant must be completed and approved by a paying entity, which is typically a corporation employing the participants. A separate process may then be used to determine the cost of the event by collecting data relating to each participant from his or her expense report.

With existing travel management systems, corporate employees attempting to schedule and/or attend an event must agree on a meeting location, cross check their agendas, and pick a date for the meeting that is acceptable to each participant. The participants may then book travel to the meeting location using a corporate self-booking tool to book a trip that is compatible with the corporate travel policies of their company. If a corporate self-booking tool is not available, the participant may make their own bookings using conventional providers, such as travel agents, airlines, and websites that provide online travel booking

As a result, each participant is limited to a "best booking" which is determined solely on a travel policy and cost basis, and, other options, such as, best method (e.g. (video)conferencing), best location, best time, are not normally considered when determining cost effectiveness. This is mainly due to the information not being made available when booking to enable the selection of an optimized solution for full cost effectiveness, particularly where the booking includes getting people from different locations to one place for a meeting.

In addition, known event management systems fail to provide ways to enhance the booking process and/or diversify their services.

US2002/0032592 describes a method for creating an online meeting using a meeting planning service via the Internet. Client data are stored in a database which can be accessed by an application server in the form of a hosted service. Modules are provided which include an event planning module for enabling group bookings to be made. A calendar is provided for stored meetings and budget information.

US2008/0189619 describes a method for creating a virtual meeting location through a calendaring application or where the virtual meeting location is integrated into virtual world client software. The steps of initiating a meeting, inviting participants, and noting preferences in the virtual world are described. Whilst the disclosure of this document is directed to virtual meetings, real world meetings are also mentioned which may be implemented as actual meetings (face-to-face), web calls or conference calls.

US2011/0015961 describes a "meetings, events, reservation" (MER) system in which users of the system are stored on a database. The users or invitees are contacted to determine their interest in a particular event, details of the event being stored in an event database and broadcast to the invitees for their response. The system describes finding the best accommodation for invitees to a particular event at a given date, time, and location in accordance with price preferences. Options are provided from which each invitee can indicate his/her preferences. A software module is provided on each mobile device to enable each user, via his/her mobile device and a web management application program, to access the MER system. Here, the MER is fixed and the only interaction with the system is by an invitee indicating his/her participation at the event.

US2012/0293605 discloses a conference room and associated resources management system in which availability of each room is stored in a server. The selection of the room is determined by parameters such as number of people to be accommodated, the resources required for the meeting etc. The system can be synchronized with a calendaring system where the availability of each room is shown on an accessible calendar.

Therefore, there is a need for improved systems, methods, and program products for creating and managing events, such as, for example, business meetings.

### Summary of the Invention

It is therefore an object of the present invention to provide an event management system which includes not only travel booking where required, but optimizes the organization of an event by determining one or more of the "best time", "best place" and "best method" for the event.

It is another object of the present invention to provide an event management system including an integrated platform supporting one or more of the following: searching, scheduling, collaborating, booking, expense management and reporting systems.

In accordance with a first aspect of the present invention, there is provided an event optimizer tool for managing the organization of an event to create at least one booking for participants to the event in accordance with criteria relating to best method, best place and best time, the event optimizer tool comprising:-
a meeting creation module operable for creating an event for participants to the event based on the availability of each participant, the meeting creation module proposing at least one option for the event to the participants;
a participant interaction module operable for receiving the options from the meeting creation module and for providing each participant with information relating to each option for the event, for receiving feedback from each participant indicative of preferences for each option for the event, and for selecting one option for all participants in accordance with the received feedback; and
an offer module operable for receiving the selected option from the participant interaction module and providing at least one participant offer for each participant in accordance with the selected option.

Each participant offer may comprise arrangements relating to the event and includes at least one of: travel information and videoconferencing information. In addition, each participant offer further comprises costs associated with the arrangements for the event.

In accordance with a second aspect of the present invention, there is provided an event management system including a hosted platform, the hosted platform comprising:-
a front end including at least one user interface;
at least one search engine interfacing with said front end;
an event optimizer tool for managing the organization of an event to create at least one booking for participants to the event in accordance with criteria relating to best method, best place and best time, the event optimizer tool comprising:- a meeting creation module operable for creating an event for participants to the event based on the availability of each participant, the meeting creation module proposing at least one option for the event to the participants; a participant interaction module operable for receiving the options from the meeting creation module and for providing each participant with information relating to each option for the event, for receiving feedback from each participant indicative of preferences for each option for the event, and for selecting one option for all participants in accordance with the received feedback; and an offer module operable for receiving the selected option from the participant interaction module and providing at least one participant offer for each participant in accordance with the selected option; and
a back end interfacing with said at least one search engine and the event optimizer tool to provide application integration.

By providing such an event management system, it is possible for a user to be able to make all arrangements for a particular event, including checking the availability of the required participants to select an event which meets the criteria of "best booking" in addition to "best time", "best location" and "best method".

In one embodiment, each participant offer may comprise arrangements relating to the event and includes at least one of: travel information and videoconferencing information. In addition, each participant offer further comprises costs associated with the arrangements for the event.

The back end preferably comprises a connection hub for managing connections within the hosted platform.

Said at least one search engine may comprise an intelligent pre-search module. The intelligent pre-search module may include an extreme search module which provides information relating to options for an event to be managed.

Said at least one search engine may further comprise an external services module.

At least one user interface is provided and which may comprise a front end portal. Said at least one user interface may comprise an administrative portal.

The event management system may further comprise a plurality of modules each of which comprises an application associated with event management. Each of said plurality of modules may comprise one of: an online booking tool; a customized profile management application; a meeting scheduler application; a travel request tool; a collaborative space application; a videoconferencing application; an event notifier application; a consolidated reporting application; a custom reporting application; and an expense management application.

A web content management application and a business rules application may also form respective ones of said plurality of modules.

Said back end may comprise a data services module and/or a data warehouse module.

In accordance with a third aspect of the present invention, there is provided a method of managing the organization of an event to create at least one booking for participants to the event in accordance with criteria relating to best method, best place and best time, the method comprising the steps of:
a) proposing at least one option for the event to the participants;
b) interacting with the participants to provide each participant with information relating to each option for the event and for receiving feedback from each participant indicative of preferences for each option for the event;
c) selecting one option for all participants in accordance with the received feedback; and
d) providing at least one participant offer for each participant in accordance with the selected option.

Each participant offer may comprise providing arrangements relating to the event and includes at least one of: travel information and videoconferencing information.

In accordance with another aspect of the present invention, there is provided a method of event management on a hosted platform, the hosted platform comprising at least an event optimizer tool for managing the organization of an event to create at least one booking for participants to the event in accordance with criteria relating to at least one of best method, best place and best time, the event optimizer tool comprising a meeting creation module operable for creating an event for participants to the event based on the availability of each participant, the meeting creation module proposing at least one option for the event to the participants; a participant interaction module operable for receiving the options from the meeting creation module and for providing each participant with information relating to each option for the event, for receiving feedback from each participant indicative of preferences for each option for the event, and for selecting one option for all participants in accordance with the received feedback; and an offer module operable for receiving the selected option from the participant interaction module and providing at least one participant offer for each participant in accordance with the selected option, the method comprising the steps of: a) planning an event for a number of participants; b) searching for proposals for the event; c) collaborating with each of the participants to indicate their preference for each of the proposals for the event; d) selecting a proposal based on the preferences of the participants; and e) proposing at least one participant offer for each individual participant based on the option selected in accordance with at least one of: best method, best time and best location.

In embodiments, the method may comprise one or more of the steps described therein.

Step e) may comprise determining whether each event option is within policy. Step f) may comprise, for each individual participant, selecting a preferred participant offer to participate in the event.

The method may further comprise the step of: g) recording expenses of individual participants for the event. This may entail pre-populating an expense module with the details of the expenses relating to the booking which can then be completed by including further expenditure once the event has occurred. In addition, the method may comprise the step of: h) reporting total costs for the event.

In accordance with another aspect, there is provided a method of managing an event, the method comprising the steps of: a) receiving, at a computing system, first data including a plurality of participants in the event and a proposed date for the event; b) receiving, at the computing system, second data including an availability of each participant on the proposed date; c) determining a first plurality of event options with the computing system based on the first data and the second data; d) receiving, at the computing system, a second plurality of event options selected by an event organizer from among the first plurality of event options; e) sending the second plurality of event options from the computing system to a client system of each participant; and f) receiving, at the computing system, preferences ranking the second plurality of event options from the client system of each participant.

In accordance with yet another aspect, there is provided an event management system comprising: one or more processors; and a memory operatively coupled to the one or more processors, the memory including instructions that, when executed by at least one of the one or more processors, cause the system to execute the steps according to the method described above.

In accordance with a yet further aspect, there is provided a computer program product comprising: a non-transitory computer readable storage medium; and instructions stored on the non-transitory computer readable storage medium, that when executed by a processor, cause the processor to carry out the method as described above.

### Brief Description of the Drawings

For a better understanding of the present invention, reference will now be made, by way of example only, to the accompanying drawings in which:-
Figure 1 is a diagrammatic view of an exemplary operating environment including an event management system;
Figure 2 is a diagrammatic view of an exemplary computer system for hosting the event management system of Figure 1;
Figure 3 illustrates a diagrammatic view of a feature pyramid illustrating benefits of the event management system shown in Figure 1;
Figure 4 is a diagrammatic view of an event management application that includes an event optimizer module and a total travel record module that implement features of the event management system of Figure 1;
Figure 5 illustrates an event management process using the event management application of Figure 4;
Figure 6 illustrates additional detils of the booking services step shown in Figure 5;
Figure 7 illustrates a process for travel booking as part of the booking services step shown in Figure 5;
Figure 8 illustrates a process for videoconferencing booking as part of the booking services step shown in Figure 5;
Figure 9 illustrates additional details for recording expenses as part of the booking services step shown in Figure 5;
Figure 10 illustrates hierarchical layers for reporting an event booking, for example, either a travel booking or a videoconferencing booking;
Figures 11 to 16 illustrate exemplary screen shots including a dashboard that may be displayed to a user by the event management system shown in Figure 1;
Figure 17 illustrates a flow chart of process steps executed by the event management system for managing an event;
Figure 18 is similar to Figure 16 but shows alternative process steps;
Figure 19 illustrates relationships between dashboard functions and other modules of the event management system shown in Figure 1
Figure 20 illustrates relationships between the event optimizer module shown in Figure 4 and a plurality of calendar programs;
Figure 21 illustrates additional details of the total travel record module shown in Figure 4;
Figure 22 illustrates the architecture of a corporate platform for the event management system shown in Figure 1; and
Figure 23 illustrates a flow chart of an event management process that may be performed by the event management system of Figure 1.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "composed of", or variants thereof are used in either the detailed description or the claims, such terms are intended to be inclusive in a manner similar to the term "comprising".

The event management system of the present invention will be described below with reference to travel management in particular, but it will be appreciated that it is not limited solely to travel management.

With existing travel management systems, corporate employees deciding on having a face-to-face meeting, agree on a meeting location, cross check their agenda and pick a date for the meeting, then use their corporate self-booking tool to book their trip within their corporate travel policy. If no corporate self-booking tool is provided, the corporate employees make their own bookings using conventional providers, such as, travel agents, websites providing online booking etc.

Corporate employees currently do not have sufficient information available in one place to allow them to choose the "best location", the "best time" and the "best method" for a meeting or other event in addition to the "best booking" to optimize the booking process whilst keeping within corporate policies. In addition, corporate management does not have the demand management tools available to guide their employees in the choices the make regarding meeting or event management.

Embodiments of the invention are directed to systems and methods for creating, scheduling, and managing an event, such as a corporate business meeting. To this end, an event management system may provide an event organizer with a user interface for creating an event. The event organizer may enter data into the event management system that defines dates for the event, participants to be invited to the event, and services that may be used by participants to attend the event, such as travel products, video-conferencing, and/or web-based services. The event management system may also receive data relating to participant calendars and/or schedules, and display participant availability to the event organizer.

To create an event, the event organizer may select the event participants and one or more times for the event. The event management system may then search for travel and/or remote conferencing solutions that would allow the participants to attend the event based on data relating to the availability and locations of the participants. The event management system may obtain participant identity and availability data by querying personal information management applications used by the participants. The event management system may also estimate costs based on the selected participants, event location, event date, and allowed methods of attendance based on data obtained from third party service provider systems. The event management system may then define a plurality of event scenarios or options, with each option including a proposed time, place, and attendance itinerary (e.g., through travel or remote conferencing) that would allow the participants to attend the event. The event organizer may select one or more of these options to be presented to the participants, with each option having a different combination of time, place, and/or method of attendance.

In response to the event organizer selecting event options, the event management system may send an event proposal to each participant. The proposal may provide the event options selected by the event organizer to the participant. Each participant may respond by indicating which event option they consider to be their most preferred or "best option", which event options are acceptable, and which event options are unacceptable. The event management system may then display the event options to the organizer with an indication of which event option was collectively rated as best by the invited participants, as well as other data regarding expected costs and attendance of each event option. The event organizer may then select one of the event options, thereby causing an event invitation to be sent to the participants. In response to the participant accepting the invitation, the event may be added to the calendar of the participant and travel to the event booked for the participant.

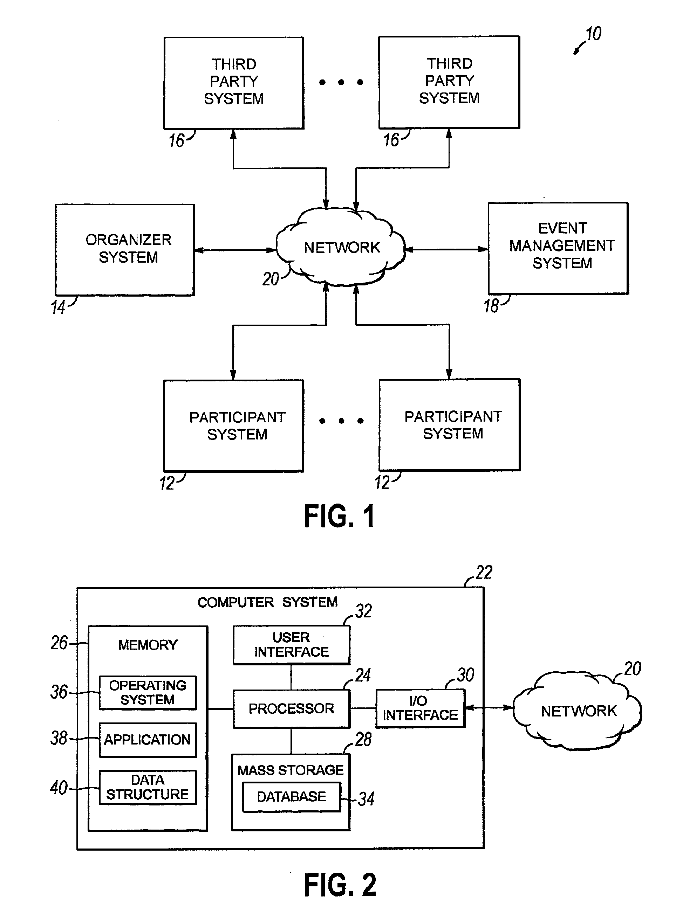

Referring now to Figure 1, an operating environment 10 in accordance with an embodiment of the invention may include one or more client or participant systems 12, an organizer system 14, one or more third party systems 16, and an event management system 18 in communication via a network 20. The network 20 may include one or more private and/or public networks (e.g., the Internet) that enable the exchange of data between the systems 12, 14, 16, 18. In an embodiment of the invention, the event management system 18 may be part of Global Distribution System (GDS), a travel management system, or any other suitable computer system used to reserve and/or book travel products.

Each of the participant and organizer systems 12, 14 may be a desktop computer, laptop computer, tablet computer, smart phone, or any other computing device that provides the user with access to the systems 12, 14, 16, 18 connected to the network 20. The third party systems 16 and/or event management system 18 may each host one or more databases. These databases may store data relating to travel products provided by an online travel agency, meta-search engine, airline, hotel, GDS or any other provider or seller of travel products. The databases may also store data relating to participant profiles, such as participant travel preferences, as well as corporate business rules and travel policies. The third party systems 16 may be configured to provide data relating to travel products to the event management system 18. This data may be provided in response to database queries from the event management system 18, and may include pricing data. The event management system 18 may be maintained by a business entity (e.g., a corporation), a travel management company, or an operator of the GDS to manage event planning and employee travel for the business entity.

Referring now to Figure 2, the participant systems 12, organizer system 14, third party systems 16, and event management system 18 of operating environment 10 may be implemented on one or more computer devices or systems, such as exemplary computer system 22. The computer system 22 may include a processor 24, a memory 26, a mass storage memory device 28, an input/output (I/O) interface 30, and a user interface 32.

The processor 24 may include one or more devices selected from microprocessors, micro-controllers, digital signal processors, microcomputers, central processing units, field programmable gate arrays, programmable logic devices, state machines, logic circuits, analogue circuits, digital circuits, or any other devices that manipulate signals (analogue or digital) based on instructions that are stored in the memory 26. The memory 26 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 34 may reside on the mass storage memory device 28, and may be used to collect and organize data used by the various systems, applications, modules, and tools described herein.

Processor 24 may operate under the control of an operating system 36 that resides in memory 26. The operating system 36 may manage computer resources so that computer program code embodied as one or more computer software applications, such as application 38 residing in memory 26, may have instructions executed by the processor 24. In an alternative embodiment, the processor 24 may execute the applications 38 directly, in which case the operating system 36 may be omitted. One or more data structures 40 may also reside in memory 26, and may be used by the processor 24, operating system 36, and/or application 38 to store or manipulate data.

The I/O interface 30 may provide a machine interface that operatively couples the processor 24 to other devices and systems, such as the network 20. The application 38 may thereby work cooperatively with the network 20 by communicating via the I/O interface 30 to provide the various features, functions, and/or modules comprising embodiments of the invention. The application 38 may also include program code that is executed by one or more external resources (not shown), or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources, or provided by computing resources (hardware and software) that are provided as a service over the network 20, such as a cloud computing service.

The user interface 32 may be operatively coupled to the processor 24 of computer system 22 in a known manner to allow a user to interact directly with the computer system 22. The user interface 32 may include video and/or alphanumeric displays, a touch screen, a speaker, and any other suitable audio, visual, and/or tactile indicators capable of providing information to the user. The user interface 32 may also include input devices and controls such as an alphanumeric keyboard, a pointing device, keypads, pushbuttons, control knobs, microphones, etc., capable of accepting commands or input from the user and transmitting the entered input to the processor 24.

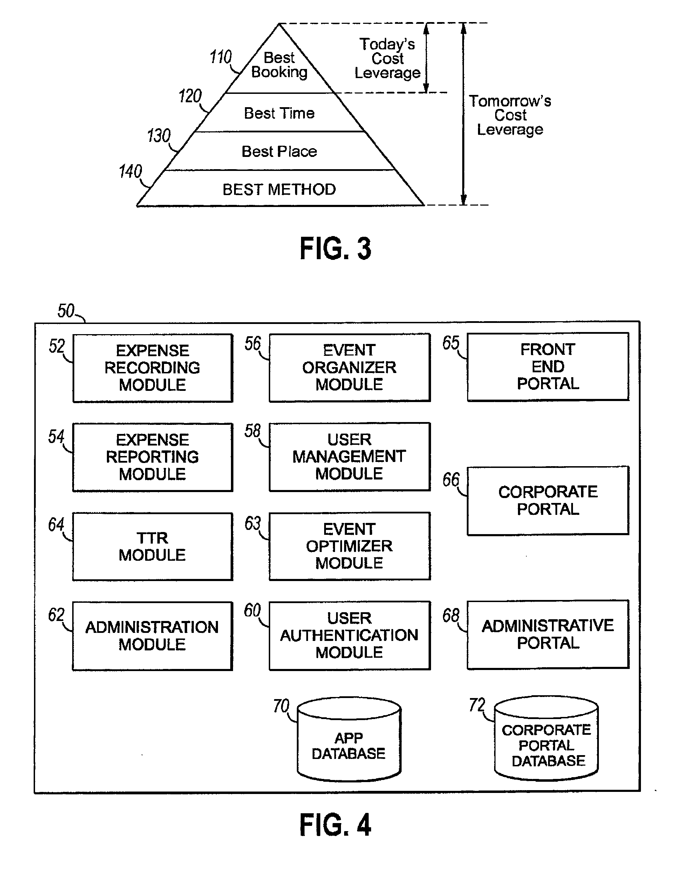

Referring now to Figure 3, while conventional systems only provide a "best booking" feature 110, embodiments of the invention, in addition, may provide a "best time" feature 120, a "best place" feature 130 and a "best method" feature 140 to optimize the event planning and booking process.

The event management system 18 (Figure 1) provides a single point for administration for all online and offline bookings, profiles of personnel, calendars, reporting and expense management. An end user (or system user) can create an event (and associated travel arrangements, if necessary), book an event-related service such as a web conference or a conference room, and complete his/her expense claim within one integrated environment. In addition, the event management system 18 may also provide travel expense reporting by correlating data from different applications, modules and sources.

The event management system 18 may propose alternatives to a user arranging an event, such as, a meeting etc., so that he/she can comply with predetermined policies to reduce cost and improve the booking process. By providing such alternatives, it is possible to choose and adapt a booking for a number of users in a simple, quick way whilst providing an overview of all component parts of the booking process. These component parts may include integrated components from other specialized systems, for example, booking of flights, hotels, meeting rooms, (video)conferencing, expense management. The event management system 18 enables effective event creation, cost management and booking of event-related travel in an end-to-end process.

A corporation using the event management system of the present invention has the advantage that it can best organize the most effective event or "meeting" including travel and/or (video)conferencing for a number of employees by providing suitable alternatives which are selectable in accordance with the availability of each employee or participant to the event.

The event management system 18 may also be utilized by travel management companies to provide added value to their service offering in terms of more effective and efficient booking processes whilst providing operational cost savings.

The description below includes acronyms or abbreviations where are defined here:
- ACM:: Adapting Coding and Modulation
- AJAX:: Asynchronous JavaScript and XML
- APF+:: Aria Portal Framework+
- API:: Application Programming Interface
- APP:: Application Portal for Professionals
- CSS:: Cascading Style Sheet
- EAR:: Enterprise Application aRchive
- ESS:: Extended Security Server
- GDS:: Global Distribution System
- GIT:: a verison control system
- HTML:: Hyper Text Mark-up Language
- JCP:: Java Common Platform
- JEE:: Java Enterprise Edition
- JRE:: Java Runtime Environment
- JSON:: JavaScript Object Notation
- KPI:: Key Performance Indicator
- MICE:: Meeting Incentive Congress Event
- NAS:: Network Access Server
- PCIDSS:: Payment Card Industry Data Security Standard
- PNR:: Passenger Name Record
- SQL:: Sequel
- SSE:: Server Side Scripting Engine
- SSO:: Single Sign On
- SSUI:: Self Service User Interface
- TTR:: Total Travel Record
- UI:: User Interface
- WAR:: Web Application aRchive
- WS:: Web Service

The term "customer" as used herein refers to an organization which is using the event management system 18 in accordance with the present invention, such as a corporation.

The term "customizer" as used herein refers to a person within an organization using the event management system who has authorization to customize features of the event management system 18 in accordance with policies of the organization.

The terms "user", "end user", "event organizer" and "organizer" as used herein refer to a person within an organization who uses the event management system to organize an event in accordance with the present invention. In some instances, the user, end user, event organizer or organizer may also be a participant to the event being organized.

The term "tool" or "module" as used herein refers to an application which enables a particular function to be performed within the event management system 18.

In accordance with the present invention, for an event, such as a meeting, the choice of travel and/or videoconferencing; location; and date with lowest travel cost if appropriate, can be made within corporate guidelines and/or policies. The main decisions that need to made in accordance corporate policies, namely, "best cost", "best time"; "best location" and "best method", can be implemented in a single system integrating different modules, applications and technologies into a single platform. Information from different suppliers is integrated into the single system and the offering of each supplier can be searched at the same time to be able to fulfill the "best cost", "best time"; "best location", "best method" requirement in accordance with any preset conditions, business rules or corporate travel policies.

In an extension to the event management system of the present invention, two additional modules for expenses and reporting may be implemented to control budget and improve supplier management. All services booked using the event management system and their associated costs are recorded in the reporting module so that the data can be used to predict total meeting cost before the booking is actually made.

Referring now to Figure 4, the event management system 18 may include an event management application 50. The event management application 50 may comprise an expense recording module 52, an expense reporting module 54, an event organizer module 56, a user management module 58, a user authentication module 60, an administration module 62, an event optimizer module 63, a total travel record module 64, a front end portal 65, a corporate portal 66, an administrative portal 68, an Application Portal for Professionals (APP) repository, or APP database 70, and a corporate portal database 72. Each module may be a full-fledged piece of logic that can access a storage system, handle data flow, and provide a full-screen user interface within the constraints imposed by the user access program, which may be a web browser.

The expense recording and reporting modules 52, 54 may be configured to record event related expenses and report these expenses to a corporate accounting system. The expense recording and reporting modules 52, 54 may be implemented to control event budgets and improve supplier management. To this end, services reserved using the event management system 18, and their associated costs, may be recorded by the expense recording module 52 so that the data can be used to predict total meeting cost before the booking is actually made.

The event organizer module 56 may include one or more Application Programming Interfaces (APIs). For example, the event organizer module 56 may search for participants using a Profile Search API that interfaces with a corporate travel management system user profile database (not shown). In response to identifying the participants, the event organizer module 56 may access participant agendas using, for example, a WebService API, which may allow the connection to the calendars of the participants. The event organizer module 56 may also store the meeting information, build event templates, and send the event templates to the participants using a storage API. The event organizer module 56 may also find the best place/date for the meeting using a GDS availability API. The GDS availability API may be developed as part of the event organizer module 56, and may have access to data relating to corporate policy and discount cards so that these are taken into account when pricing and booking travel. Video-conferencing may also be handled by the WebService API. APIs may also be implemented to facilitate communication between modules. The event organizer module 56 may confirm the event and booking of travel by, for example, sending an e-mail to each participant with the booking information using an e-mail API. In an alternative embodiment of the invention, integrated booking may be used.

While embodiments of the present invention will be described with reference to each participant booking their own travel or trip using the booking information provided to them, the event management system 18 may permit users to book information centrally, for example, by using a single click to book travel or other services related to an event. The event management system 18 may also include one or more portal frameworks that contain everything that is needed by the event management system applications and modules to build a workflow, such as persistence, navigation, etc.

External applications may be integrated, for example, by placing a Hyper Text Markup Language (HTML) document of the external application in an inline frame, or "iFrame". Unlike an object element, the iFrame can be a target frame for links defined by other elements. Thus, the iFrame may be selected by a module as the focus for printing, viewing source, and so on. The iFrame may thereby provide a site within a site, for example. An e-travel management module (not shown) having such integrated external applications may thereby be configured to only display the output of modules that is relevant to a particular user.

The corporate portal 66 may comprise various technologies used in the event management application 50. Some of these technologies may be provided as part of the event management application 50, and others can be used to allow customers to build their own corporate portal application within the framework of their corporate portal 66 in a hosted web-based environment. Each customer may thereby be provided with the ability to develop, test, and load their application independently, at any time, and without involvement of the host of the web-based environment. A set of predefined modules may be provided having predefined operational parameters that cannot be altered by a customer, except through some selected configuration parameters, such as user authentication, profile management, and self-registration functional ities.

The user authentication module 60 may provide users of the corporate portal 66 with the benefit of a platform running in a secured context or environment that allows access to a variety of other applications.

A set of customization technologies, on both the client and server sides, may be provided by the event management application 50, thereby allowing customers to create, host and execute ad-hoc modules and functionalities. On the client-side, the use of iFrame technology may enable the customer to define the layout of the various user interface modules, interact and navigate among these modules, alter their look-and-feel, and/or interact with other platforms, such as an e-travel management platform. The customer may have the ability to call server-side modules, which may be used to implement the business logic of the event management application 50. Various software technologies may be included around the templates framework in a controlled environment, such as HTML, Cascading Style Sheet (CSS), and JavaScript. On the server-side, the customer may have access to set of technologies complemented by APIs allowing interaction with platform systems and/or external systems, thus creating the needed business logic to populate the client-side modules with data. In any case, these custom modules, whether client-side or server-side, may be defined as a set of files hosted by a source-control management system with an administration interface.

When first accessing the corporate portal 66, the user may reach a "home page" displaying a login interface. If the user cannot provide valid credentials, the user may be invited to create an account by following instructions that eventually brings the user back to the home page. In the case where the event management system 18 has yet to be configured, the user may arrive at an "empty shell page" after logging in. This empty shell page may be developed into the home page of the customer, which may be created using the customization technologies. The empty shell page may thereby be developed by the customer to provide a home page unique to that customer.

User authentication may be achieved using the user management module 58, which may be integrated as a default component of the corporate portal 66. All users accessing the user management module 58 may be required to own a valid account. Data relating to these accounts may be stored centrally for access by the user management module 58. Users authenticated through the corporate portal 66 may be able to access a variety of other products. Users not having an Extended Security Server (ESS) account may have to self-register in the corporate portal 66 using a standard self-registration procedure.

The front end portal 65 may provide a means through which a user, such as an employee or a travel manager, can access the event management system 18. Management of user profiles may be provided by a centralized profile management system, which may be provided by the front end portal 65. The profile management system may also enable a self-registration flow. To this end, the profile management system may include a self-service user interface that allows users to modify their own profiles. The administration module 62 may manage the profiles to which the respective user has administrative rights. To be able to use the administration module 62, a user may need to have a specific administrative account. Once a profile is saved within the system, a client-side event may be raised which may be input to custom modules for further actions, such as refreshing displayed data.

Technologies offered to the customizer may be offered on both the client side and the server side of the event management application 50. Client-side technologies supported may include:
(1) HTML 4 & 5,
(2) CSS 2 & 3, and
(3) JavaScript.

JavaScript may support a templates framework to create custom layouts and views in a web 2.0 perspective (i.e. a rich asynchronous JavaScript and XML application), as well as any mobile terminal operating system (OS), such as iOS, Android, or any other suitable mobile terminal OS. Server-side features may include the Groovy language framework, which is a superset of Java offering syntactic sugar, via the server-side scripting engine. This may allow the creation of strong business logic. The server-side features may be efficiently complemented by a business API-like profile and/or Passenger Name Record (PNR) management.

In an embodiment of the invention, custom developments, that is, those made by customers, may be stored as files in the APP database 70, and backed-up by a distributed revision control and source code management (SCM) system to maintain a history of software version and developments. One suitable SCM system may be Git, which is distributed under the terms of the GNU General Public License version 2. Custom developments of the corporate portal 66 may be stored in a data centre associated with the host system so that custom scripts for the corporate portal 66 cannot be hosted elsewhere or be executed from outside the corporate portal 66. Consequently, in some embodiments of the invention, the only way of accessing certain pieces of remote logic may be by building a Web Service, and targeting the remote logic with a custom script making use of the associated API.

As described above, once successfully logged in, the user may reach the home page. That is, user may reach the shell page that the customer has developed in order to effectively create their corporate portal application. The home page may be built on a suitable page engine utility of the templates framework offering a standardized way of defining the page layout and communication between custom modules. By way of example, the home page may have:
(1) a name;
(2) menu and footer blocks which are managed directly by the template framework;
(3) a plurality of main placeholders (e.g., three placeholders in the form of a sidebar, a body, and ads); and
(4) a plurality of sub-placeholders in the body (e.g., two placeholders in the form of a search placeholder and a result placeholder, the result placeholder having different content fields).

Once created, this file may be automatically loaded and served at the initialization of the corporate portal via a service provided by the framework. In effect, the customer may thereby have full control of the definition of their corporate portal application layout and content within the limits allowed by the sandboxing mechanism.

The architecture of the corporate portal 66 may include a three-tier application having a data tier, a data access or business tier, and a presentation tier. The data tier may include the corporate portal database 72 (which may be, for example, powered by Microsoft SQL Server® available from the Microsoft Corporation of Redmond, Washington, USA) and file-system layer, which may be provided by a network access server. The business tier may be powered by a Java Runtime Environment (JRE) 6.0/Java Enterprise Edition (JEE) 5.0 application server, such as a Weblogic Server 10.3.6. This layer may run the core of the corporate portal implementation, as well as offer session management and replication capabilities. The web layout tier may be run by any suitable web server application, such as iPlanet 6 (available from the Oracle Corporation of Redwood City, California, USA), and may be in charge of serving static resources and handling load-balancing and session stickiness.

The corporate portal database 72 may be configured to store definitions of communities, parameters, global lists, and other related settings. In embodiments where the corporate portal 66 is built around APP technology, an adapting coding and modulation (ACM) database, as well as access to a network access server (to store client and server-side scripts), may also be included in the corporate portal 66.

The business tier may be built using a standard Java Common Platform (JCP) enterprise application archive (EAR) structure. At the enterprise application archive level, the following may be provided:
(1) a Java common platform utility & framework component (offering all middleware services like configuration, logging, database access, concurrency, payment card identity data security standard (PCIDSS), etc.), as well as Java common platform connectors (to handle connectivity with host - through 1AXML - or external systems);
(2) a server-side scripting engine having server-side framework and APIs, and including the integration bricks with the APP database 70; and
(3) all third party dependencies linked by the requisite modules, such as Groovy or JavaScript Object Notation (JSON) libraries.

The web application archive level, or presentation tier, may provide bootstrapping Java server pages. These pages may provide a link between the built-in modules and the initial empty frame page. The bootstrapping Java server pages may also trigger initialization of the templates and server-side scripting engine frameworks. The presentation layer may also provide an Aria Portal Framework+ (APF+) component that handles the flow control for non-customized modules, and all non-static artefacts of the built-in modules.

The corporate portal 66 may be hosted on a platform that is web 2.0 oriented. The flow control, for the customized modules, may be achieved at the client-side level, and managed directly through the templates framework facilities. The presentation tier may include a set of folders containing the static resources of the corporate portal built-in modules, such as the templates or server side scripting engine frameworks artefacts themselves, built-in cascading style sheets or pictures, and any other suitable data.

The server-side scripting engine may offer both server (Profile, e-mail, Web Service, Storage, etc.) and client-side APIs (events, REST calls, etc.). More particularly, the Web Service API may be used for retrieving e-travel management availability results for a given user as if the user logged in and performed the availability query manually. For this purpose, the Web Service API may identify the user by their unique ID. The availability results may thereby include applicable company policies as well as traveler information, such as discount cards or memberships.

Existing web applications may be integrated into one or more of the portals 65, 66, 68, using an iFrame. The respective portal may thereby provide a "convenience" method to integrate the corresponding web application, depending on the needs of the user. In some embodiments, the communication to and from the embedded site may be limited by the use of iFrame. The web browser of the user may also include an API that communicates using the iFrame content.

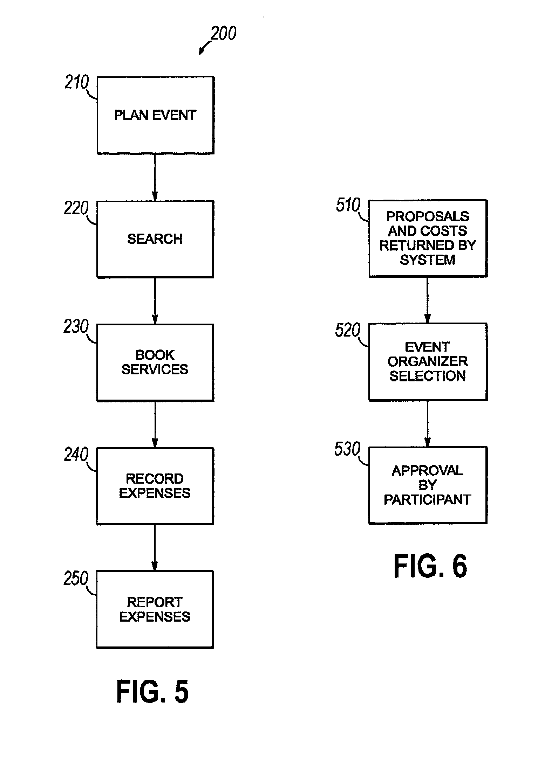

Figure 5 illustrates a booking process 200 in accordance with an embodiment of the invention. The event management system 18 may support a process that starts by defining a business event rather than a travel request. The booking process 200 may thereby provide additional leverage as compared to conventional systems, as described above with reference to Figure 3. Each step may be implemented by one of more systems or modules that are integrated into the platform provided by the event management system 18.

In block 210, an event for which a booking may need to be made is planned. Exemplary events may include a meeting with a client, a supplier, between employees of the corporation, or a training session or other event where multiple participants from a corporation are required to attend. The participants may be located at the same or different offices, and may have to travel to attend the event. Data provided to the event management system 18 may include the event type, the desired participants, and one or more dates on which the event may occur. If the event is an event where each participant must attend (e.g., a training session), there may need to be some flexibility in the dates so that all the required participants can be present.

In response to receiving data identifying the desired participants, the event management system 18 may retrieve data relating to the participants location and availability. This data may be stored, for example, in a user profile database of a travel management system. Participant availability data may also be retrieved from a personal information management application provided to employees by the corporation. This application may provide participant calendars, e-mail, address books, and to-do lists, from which the event management system 18 may obtain participant identities, availability, and other participant data. The requirements of each participant, such as availability and location, need to converge with those of the event in order for the event to occur as planned. For example, a meeting in which suitable dates, times, and locations are considered so that all participants may attend. The constraints of the participants may be determined according to their availability and profile data. In an embodiment of the invention, one or more of these constraints may be set by each participant.

In block 220, a search may be carried out for parameters that influence the booking of the event. For example, total cost, proposals, location, date and time, and services required with the eventual approval of the event prior to booking. This step may be implemented by a scheduler search engine that takes into account the type of event, the event participants, event dates, and total cost of the event, factoring in fares for travel and expense histories for different event options. The scheduler search engine may also factor in corporate policies regarding participants attending the event in person verses by video-conference, and corporate travel rules.

Event planning may include search and evaluation of the different options for defining and attending the event, and the cost associated with conducting the event. Depending on the event type, corporate policy could provide automated rules on the flexibility for the different options which need to be investigated. The event management system 18 may calculate and return the total cost of the event for each option, along with the number of hours travelled. The event management system 18 may return event options based on selected parameters, so that the event organizer can select one or several options, or request new alternatives with another search. For example, an internal meeting option may consider video-conference versus travel, as well as several possible dates and locations. A client meeting may be more restrictive since the client may have provided a limited number of dates and/or locations for the meeting. An interview or a relocation trip for a prospective employee may have a fixed location, but allow flexibility on dates. The event and participants therefore need to mesh with total cost, which in turn is governed by corporate policy. An example of this implementation will be described in more detail below.

In block 230 the required services may be booked. This booking may include making travel arrangements and/or arranging a video-conference according to the type of event. It will be appreciated that each event may have a unique set of criteria that needs to be fulfilled for the event to be successful. In any case, a final booking approval may be required from each participant before the event is set.

Referring now to Figure 6, the booking of services in block 230 is depicted in greater detail. As a result of the search performed in block 220, several event options may be returned as indicated by block 510. The event options may include different dates, locations, and attendance options. For example, assuming that the event organizer provided three possible dates A, B, and C for the event, the event management system 18 may indicate that:
(1) video-conferencing is possible if the event is occurs on date A,
(2) the event could be held in one location on date B, and
(3) the event could be held in another location on date C.

In block 520, the organizer may select one or several of the options presented by the event management system 18 in block 510. Once the event organizer is satisfied with their selections, the event organizer may confirm their selections.

In block 530, to help the event organizer make decisions regarding the selection of event options, the event organizer may cause the event management system 18 to send one or more of the options to the participants. In response to receiving the options, the participants may confirm their preferred options. The options sent to each participant by the event organizer may each contain the proposed event date, time, name, media, location and price with policy indicator. Each option may raise an approval flow for corporate participants. The approval flow may include approval by the participant, and/or by the corporation based on hierarchical and/or cost related metrics. Some corporations may or may not implement approval depending on their respective corporate policies.

Depending on the individual participant, the event options may include pre-booked (e.g., on hold or reserved) trips, or just an information message pre-filled with booking suggestions for trips or other services that satisfy the proposed events which the participant will need to book separately. In an embodiment of the invention, participants may rank their preferences for each of a plurality of event options, rather than just confirming that a single event option is acceptable or preferred.

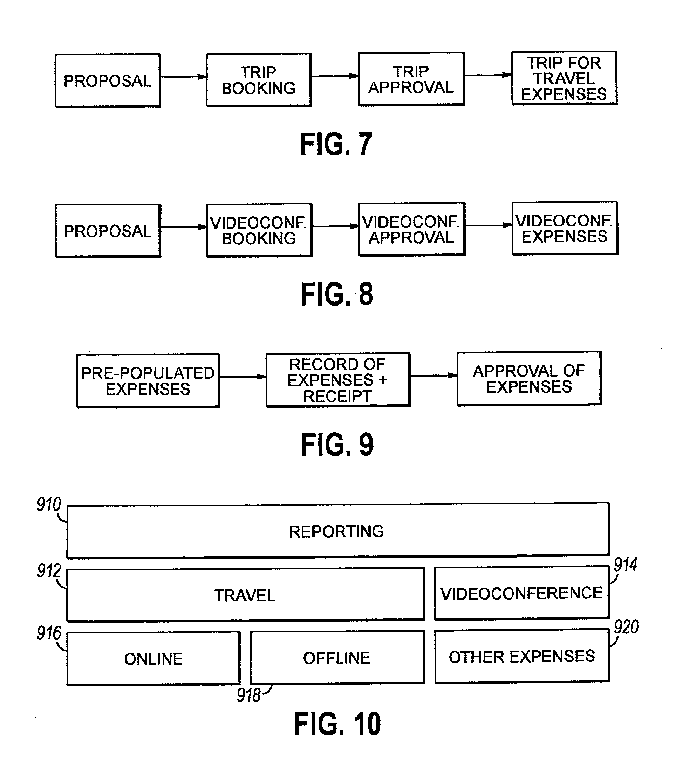

If the event option includes travel, the travel may be booked and approved through the event management system 18. In this case, the process may proceed to block 240. If the event management system does not support the expense recording and reporting features, blocks 240 and 250 may be omitted. In block 240, information relating to event related travel may be passed to the expense recording module 52 of event management application 50, where the travel expenses may be recorded as shown in Figure 7. Similarly, if the proposal is to use video-conferencing, the video-conference may be booked and the video-conferencing expenses passed to the expense recording module 52 of event management application 50 for recording, as shown in Figure 8.

In response to the video-conference and/or travel being booked and confirmed, an expense entry may be pre-populated in an expense management system as will be described in more detail below. Each participant can then start recording their expenses (travel and non-travel) with the corresponding receipt information. Recorded expenses may (depending on each corporation policy) require approval by hierarchical or cost approvers, as shown in Figure 9.

In block 250, expenses relating to the event may be received by the expense reporting module 54. The expense reporting module 54 may compare amounts spent by the participants with an allowed budget. Other internal analytical processes and data may be available to the expense reporting module 54, such as traveler profile data, cost centre data, and projects data.

Referring now to Figure 10, the expense reporting module 54 may provide reporting functions 910 that retrieve or otherwise receive data from booking tools. This data may include as travel expenses 912, video-conference expenses 914, online purchases 916, offline purchases 918, as well as other event and travel related expenses 920.

The event optimizer module 63 may facilitate the management of participants, dates, locations and services. Information relating to each participant may retrieved from their profile, or from other internally provided data. In an alternative embodiment of the invention, this information may be entered manually to provide participant location, known constraints, and availability. Confirmation of the event may be managed by the event organizer, who may be in collaboration with other event organizers in other corporations or companies. Event templates may be utilized for recurring events, such as regular meetings with the same participants.

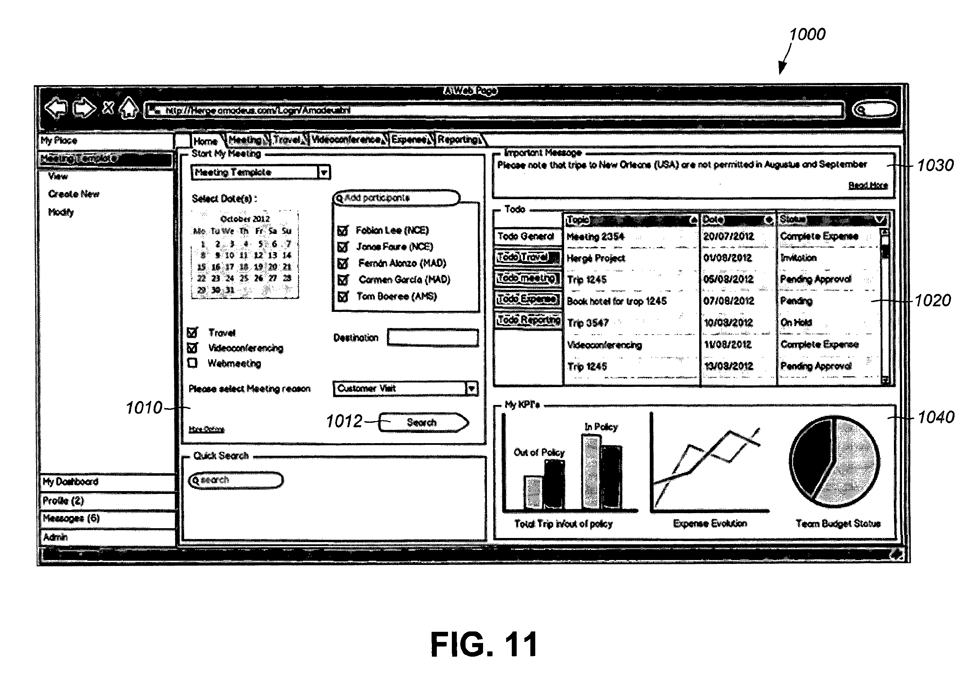

Referring now to Figure 11, a user, such as an event organizer, wishing to plan an event may log into the event management application 50 through the front end portal 65 and user authentication module 60. The event optimizer module 63 may provide a dashboard, such as exemplary dashboard 1000, to the event organizer once logged onto the event management system 18. The dashboard 1000 may enable the event organizer to define an event by entering search criteria. The search criteria may be entered in pane 1010 by selecting a date or week for the event, an event location, the type of event (e.g., a meeting), and the participants to be invited to attend the event. The event organizer may also select services to be used (e.g., travel, video-conferencing, web meeting etc.) and a reason for the event. The event management application 50 may access one or more personal information management applications via the corporate portal 66 to obtain participant data. Participant identities and availability may thereby be retrieved from address books and calendars maintained by the personal information management application. Data retrieved in this manner may also include participant locations.

Further options may be added to the event. For example, if the event organizer proposes to hold the event in a specific place, an event template may be automatically populated with the relevant information for that place, an indication of whether the attendance of each participant is essential or optional, and the time needed for the event.

Information relating to previous events may be shown in pane 1020, with warnings being provided in pane 1030, and a summary of the key performance indicators being shown in pane 1040. Persons having ordinary skill in the art will understand that other panes may be provided for indicating additional information and/or allowing additional functionality. Embodiments of the invention are therefore not limited to, nor required to have, the panes illustrated in the exemplary embodiment shown.

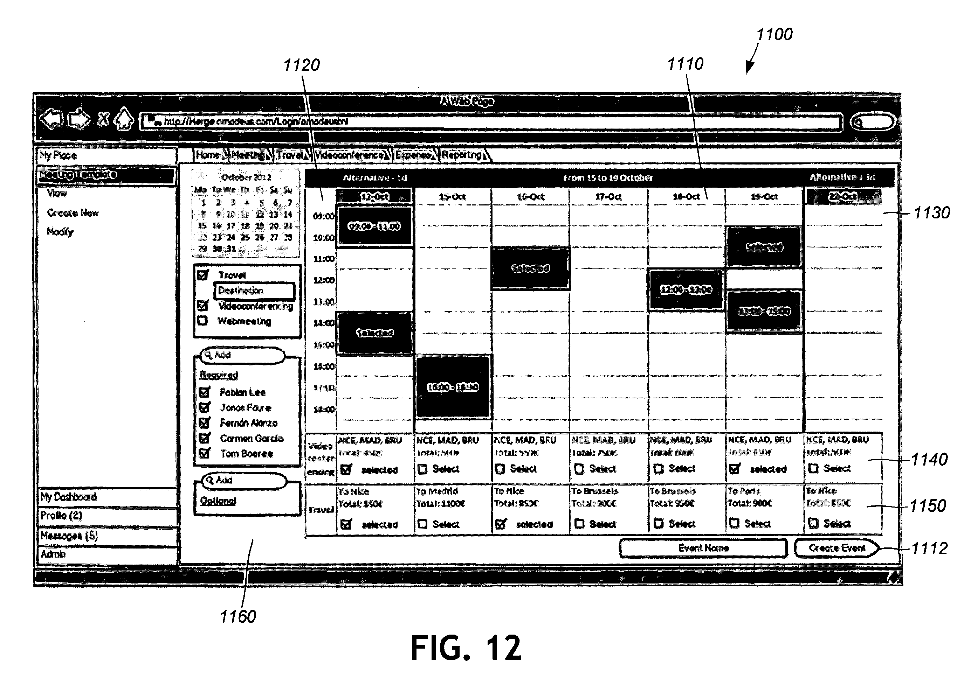

In response to starting the search, such as by activating a search button 1012, a search result screen may be returned. The search result screen may enable the event organizer to select desired options before sending the event options to the participants, and may include a unique event name that identifies the event. Exemplary search results are shown in Figure 12, which includes a calendar overview. The calendar overview may be generated based on participant availability data received from the personal information management application calendar module. The results for a selected week, for example, are shown in pane 1110, with the results for the previous and following weeks being shown in panes 1120 and 1130, respectively. Pane 1140 may provide information relating to the possibility of video-conferencing, and pane 1150 may provide information relating to travel options. Pane 1160 may provide a summary of the information entered in pane 1010 of dashboard 1000 (e.g., the participants and approved methods of attending the event).

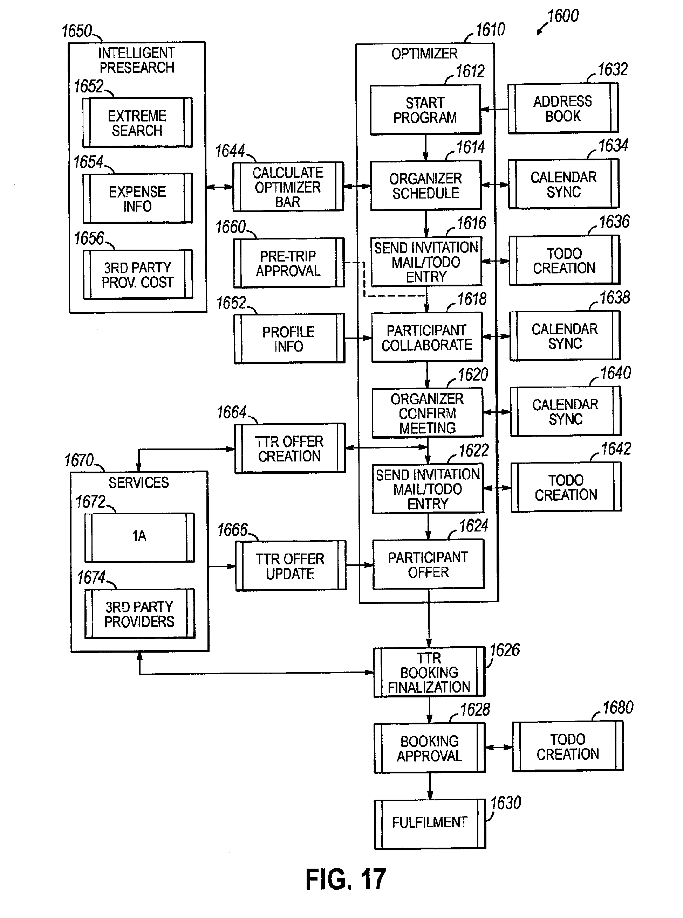

Based on the locations of the event and the participants, the event management application 50 may also determine what, if any, travel would be required for each participant to attend the event. In cases where travel is required, the event management application 50 may retrieve data relating to travel solutions (e.g., flights, hotels, trains, as well as the costs and time required) for the participant in question. This data may be retrieved from third party systems 16, remote or local databases containing cached travel data, or any other suitable source. The event management application 50 may then estimate or otherwise determine the total cost of travel, or the trip price, for each event option based on the received data. In an embodiment of the invention, the trip price information may be provided by an intelligent pre-search module 1650, as will be described in greater detail with regard to Figure 17.

Behind the calendar, information on the estimated total trip price and travel time requirements may be shown for each service and option selected. In response to the event organizer selecting a day and a time for the event, a re-calculation may be done to provide an updated price and travel time requirement. On the calendar, the event organizer may also see when they and/or a participant is busy. However, participant calendar data may be filtered so that information relating to private details of the calendar of the participant, such as the content of appointments, is filtered out. In pane 1160, the organizer may select, add or delete participants, which may cause the event management application 50 to update the calendar, price, and location accordingly.

The event organizer may select from a plurality of dates for the event, such as the three dates depicted for the meeting being scheduled in the illustrated example. Each date of the plurality of dates may be for the same or different time slots, with each time slot starting on the hour, the half-hour, the quarter hour, or any other suitable starting time. In different embodiments of the invention, time slots may be more or less precise according to the implementation of the event management system 18 and the requirements of the customer.

In response to the organizer clicking on, or otherwise activating a "create an event" button 1112, each participant may receive an event notification. The event notification may include a link to the event options in accordance with the preference selection made by the event organizer. In the example shown in Figure 12, and in particular in panes 1110, 1120, 1140, 1150, the event organizer has selected options for:
12 Oct (both video-conferencing and travel),
16 Oct (travel only) and
19 Oct (video-conferencing only).

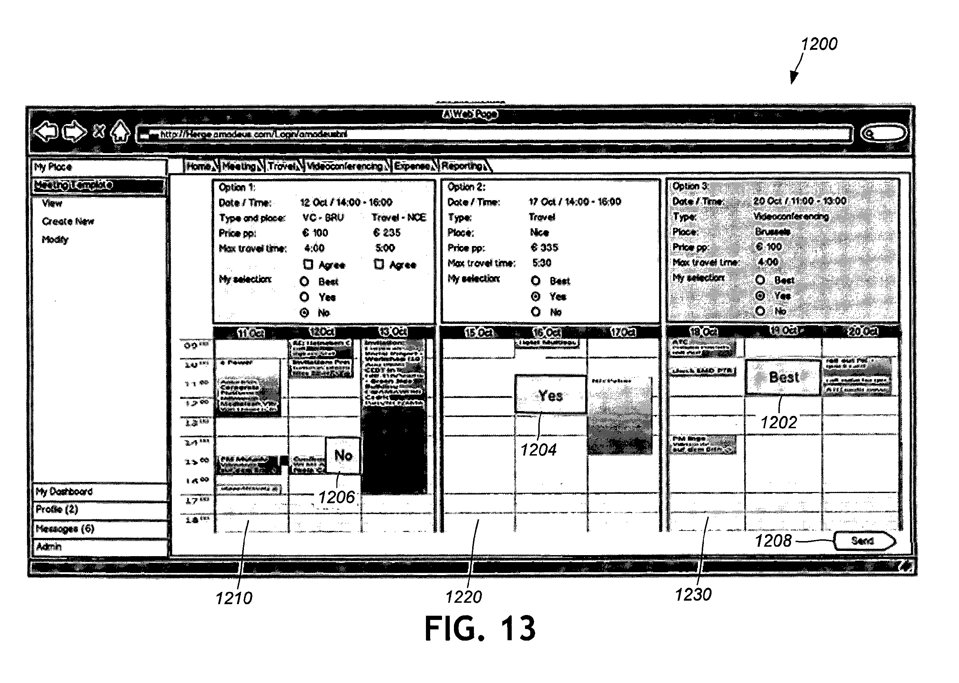

Referring now to Figure 13, in response to the event organizer sending the proposed event options to the participants, each participant may be presented with an option screen 1200. This screen may be integrated with a personal information management application of the participant so that the participant can view the options using, for example, the calendar feature of the application. The participant options screen 1200 may enable the participant to select their preferences for the event. A plurality of panes, such as the three panes 1210, 1220, 1230 shown, may be provided with each pane corresponding to one of the options selected by the event organizer. The participant may be provided with a calendar overview per proposed date, with each view providing some overhang, such as one day before and after the event. In a portion of each pane (e.g., the top portions of panes 1210, 1220, 1230), the participant may be provided with information on the proposed event. This information may include the method of attending the event, the date of the event, the location of the event, the start and ending times of the event, and an estimated price of attending the event. The participant may rank the options to provide the system with information regarding the preferences of the participants.

In exemplary embodiment shown, the options screen 1200 provides the user with the option of selecting "Best, "Yes", or "No" by activating corresponding buttons 1202, 1204, 1206. As shown in Figure 13, the participant has selected 19 Oct as the "Best" option, but the participant could also attend the 16 Oct event option, as indicated by the activation of the "Yes" button 1204. However, the participant has indicated an inability to attend the 12 Oct option by activating the "No" button 1206 due to a conflict. Rather than activating the "No" button 1206, the participant may also have the option of cancelling the pre-existing commitment to make room for the event. The participant may choose to do this if, for example, the pre-existing commitment being cancelled has a lower value to the participant than the event. Presenting the event options through the home calendar of the participant may thereby facilitate participant planning and to-do list optimization. Once the participant is finished making their selections, they may activate a "Send" button 1208 to transmit their selections to the event management application 50.

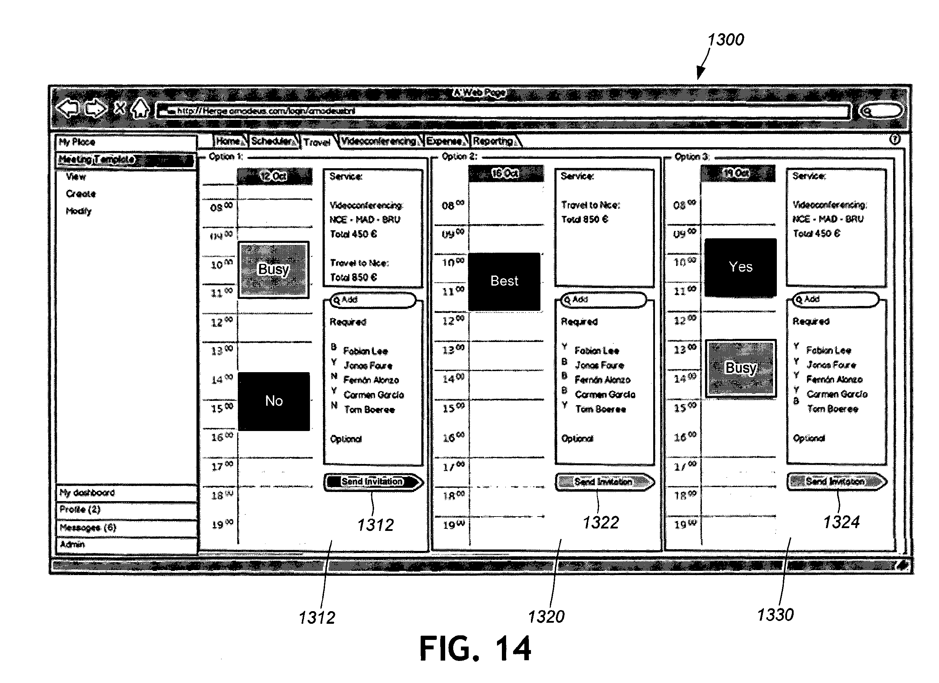

Referring now to Figure 14, in response to the participants selecting their preferences, the event management application 50 may display screen 1300, which presents the event options data in panes 1310, 1320, 1330. Panes 1310, 1320, 1330 may display the preferences of each participant, and an indication of the relative overall desirability of the option based on the rankings made by the participants. In cases where at least one of the participants has indicated that the option is unacceptable (e.g., at least one of the participants selected "No" for that date), the event management application 50 may prevent the event organizer from selecting that option. The event option with the most participants selecting "Best" may be shown as the "Best Option".

In response to the event organizer selecting one of the event options, an event invitation may be sent to the participants. If the participants use the same system as the event organizer and/or the same travel management company, they may receive an invitation for the selected event option that includes a plurality of participant selectable features, such as method of attendance or travel options. Because participants may not all be travelling to the event from the same origination points, or all have the same preferences or travel budget authorizations, the selectable features may be customized for individual participants. For example, the options presented may include different flights for different participants. Each of these options may also include a policy indication to inform the participant if the option is in-policy, in-policy with a requirement for justification, or out-of-policy. The participant may then select the desired option. If the selected option includes an out-of-policy feature, the participant may be requested to provide a justification or request approval before the option is booked.

In the example shown in Figure 14, the option for 12 Oct depicted in pane 1310 cannot be selected by the event organizer because two participants have indicated "No" in their preferences. The inability to select an option may be indicated by a greyed out "send invitation" button 1312. The other two dates, 16 Oct and 19 Oct depicted in panes 1320 and 1330 respectively, are both possible for all participants. The event organizer may select 16 Oct because more participants have indicated that this option was their "Best" option. However, the event organizer may also select an option other than the best option. This may be due to the price of the best option being too high, or because the other option is preferred by a participant whose time is more highly valued than the other participants, such as an officer of the company. Once the event organizer decides on which available option to select, they may activate the corresponding "send invitation" button 1322, 1324.

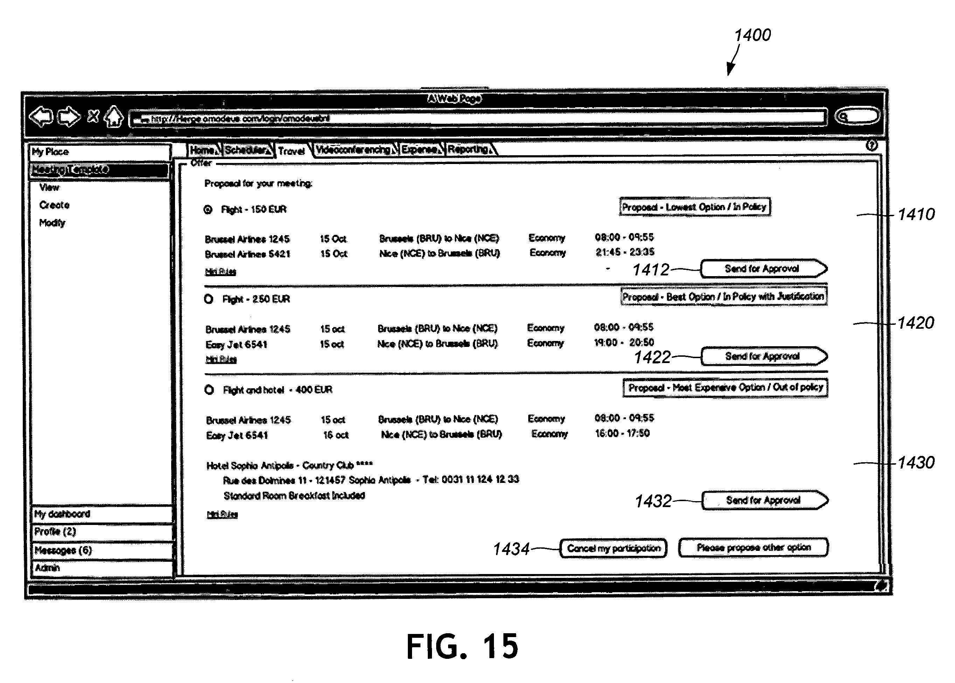

In response to the event organizer sending the invitation, the participant may be provided with an event options screen, such as the exemplary screen 1400 shown in Figure 15. In this example, three options for attending the selected event are presented to the participant, with each option being presented in a separate pane 1410, 1420, 1430 of options screen 1400. In this example, a lowest price option that complies with corporate policies regarding events and travel is presented in pane 1410 of options screen 1400, a best option in-policy with justification is presented in pane 1420 of options screen 1400, and the most expensive option, which is out-of- policy, is presented in pane 1430 of options screen 1400. The data presented by the options screen 1400 may be updated periodically. So, for example, if the participant waits several days to send an option for approval, the price and/or availability of that option may be different than when the invitation was initially received.

Each option can be selected by selecting the corresponding "send for approval" button 1412, 1422, 1432. However, because this participant needs to be in Nice the day before the event for another meeting, and the only travel option that arrives at Nice by this date is the option offered in portion 1430, the participant may select the most expensive option. This may result in a request for approval being sent to an approver, such as a supervisor or accounting department employee. The participant may also have the option of withdrawing from the event by selecting a "cancel my participation" button 1434.

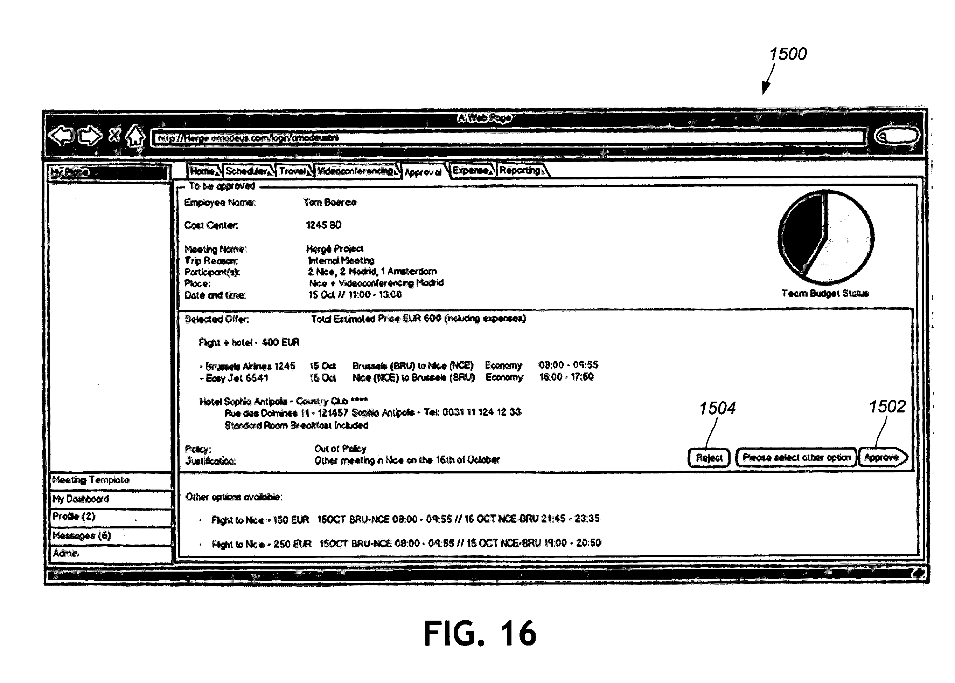

Referring now to Figure 16, if an optional approval process is in place, and/or the participant selects an option requiring approval as discussed above, an approval request may be sent. The request may be presented in the form of an approval request screen, such as exemplary approval request screen 1500. The approval request screen 1500 may display general meeting information, the meeting budget status, the option selected by the participant with policy and justification information, and any alternatives proposed for each participant. The approver can decide to "approve" or "reject" the selected option by activating the corresponding button 1502, 1504. The approver may also request the participant select another event option using the "please select other option" button. In response to being approved, the selected option may be automatically booked. If no approval is required, the event option may simply be booked in response to the participant selecting the option in the event options screen 1400.

In the exemplary embodiment depicted in Figure 16, the approver is provided with information about total estimated price, the service to be used, as well as details, policy information, and justification for the selected option. Information concerning the other options may also be provided so that the approver can determine if one of these options should have been selected by the participant. In response to the authorizer approving the event option, booked travel may be recorded by the total travel record module 64 so that travel relating to the event is associated with the expenses for that participant. In any case, the participant may receive a confirmation once the trip is booked. The calendar and to-do lists in the personal information management application of the participant may also be automatically updated to include the event.

Persons having ordinary skill in the art will appreciate that the screen shots or dashboard functions shown in Figures 11 to 16 are by way of example only to explain the operation and advantages of the event management system 18. Embodiments of the invention are therefore not limited to the format or content of the illustrated screens, and the presentation of data to the users may be customized as desired.

Referring now to Figure 17, a flow chart illustrates an event creation and optimization process 1600 in accordance with an embodiment of the invention. An event optimizer 1610 is shown interacting with additional system processes. The optimizer steps include starting the event management program as shown in step 1612. Step 1612 may include the event organizer accessing the event management system 18 through the front end portal 65 of event management application 50. The event organizer may be prompted for their login identity and password, which may be authenticated by the user authentication module 60. Once the organizer has logged into the event management system 18, they may enter data identifying the desired participants, proposed dates for the event, event information such as location and type of event, or any other suitable data. Data relating to the participants may be obtained from an address book 1632 of a personal information management program residing on the corporate network. This data may include participant identity and location. Once the initial data has been received, the process may proceed to step 1614 to schedule the event.

During the scheduling step 1614, the event organizer module 56, or any other suitable module, may perform calendar synchronization 1634 with the calendars of each of the participants by obtaining calendar information from one or more personal information management applications. The event optimizer module 63 may also perform a search using an intelligent pre-search module 1650 to retrieve data relating to estimated event expenses.

The intelligent pre-search module 1650 may comprise an extreme search module 1652, an expense information module 1654, and a third party cost module 1656. The extreme search module 1652 may provide a cache of data relating to flight costs from and to a plurality of origination and destination locations. This cache may be updated on a regular basis, such as nightly during an off-peak time. While the cache may be refreshed at other times, it will be appreciated that, due to the amount of data which needs to cached, it may be preferable to perform the refresh cycle when the event management system 18 is not being heavily used. The expense information module 1654 and third party cost module 1656 may be accessed by the intelligent pre-search module 1650. The expense information and third party cost modules 1654, 1656 may also include cached data which can be regularly updated if necessary.

An optimizer bar calculation 1644 may generate an optimizer bar based on the event data received from the intelligent pre-search module 1650 and the participant data received from the personal information management application. The optimizer bar may present the event option data in an organized manner to the event organizer. Returning to step 1614, the event organizer may select event options based on event data presented by the optimizer bar and the availability data received from the calendar synchronization 1634. The optimization process 1600 may then proceed to step 1616.

In step 1616, the event management application 50 may send invitations to the participants in response to instructions from the event organizer. In response to these invitations, a task creation step 1636 may trigger sending of e-mail or creation of "to-do" lists for the participants. These e-mails and/or to-do lists may prompt the participants to respond to the event invitations by selecting event options as discussed above. The invitations and/or the participant responses may also prompt activation a pre-trip approval step 1660. Profile information for each participant may be obtained in profile information step 1662 and received by the event optimizer module 63 in the participant collaboration step 1618. If pre-trip approval is required, the optional pre-trip approval step 1660 may be performed prior to the participant collaboration step 1618.

The participant collaboration step 1618 may include the profile information step 1662 to obtain profile information for each participant, such as from a corporate travel management system database. The collaboration step 1618 may also include a calendar synchronization step 1638 that synchronizes the event with the calendar of the participant. Based on the profile and calendar information, the participant may selectively rank the event options presented by the event proposal. This information may then be provided to the event organizer.

In step 1620, the organizer may confirm the event or meeting by selecting the best option as determined from the responses of the participants. In response to this confirmation, the optimization process 1600 may execute a confirmation step 1622 that sends invitations to the participants and synchronizes the calendars of the participants via a calendar synchronization step 1640 that adds the event to the calendar. The confirmation step 1622 may also add the event to the to-do list for a participant in a "to-do" creation step 1642.

Thus, there may be a plurality of interactions between the event optimizer steps and external resources. For example, as discussed above, the participant address book 1632 may provide input to the event management application in the program start step 1612. Calendar synchronization 1634 may also interact with the organizer scheduling step 1614. To-do creation step 1636 may interact with sending the invitation in step 1616, and calendar synchronization step 1638 may interact with the participant collaboration step 1618. An additional calendar synchronization step 1640 may occur in response to the organizer confirming the meeting in step 1620. Likewise, an additional task creation step 1642 may interact with the confirmation step 1622. The to-do lists and calendars of the participants may thereby be kept in synchronization with scheduled events.

The participant offer 1624 may be selected by the participant in response to receiving confirmation of the event from the event organizer. The confirmed option may be booked through a total travel record booking finalization step 1626, followed by a booking approval step 1628, and fulfilment step 1630. Total travel record offer creation 1664 may occur before the confirmation step 1622, and may interact with a services module 1670. The services module 1670 may include internal information 1672 and third party provider information 1674. The output from the services module 1670 may be a total travel record offer update 1666 which is input to the participant offer 1624. Interaction with the services module 1670 may also occur at the total travel record booking finalization step 1626. An additional task creation step 1680 may be provided at the booking approval step 1628 for expense claims, which may be added to the corresponding to-do list of the participant.

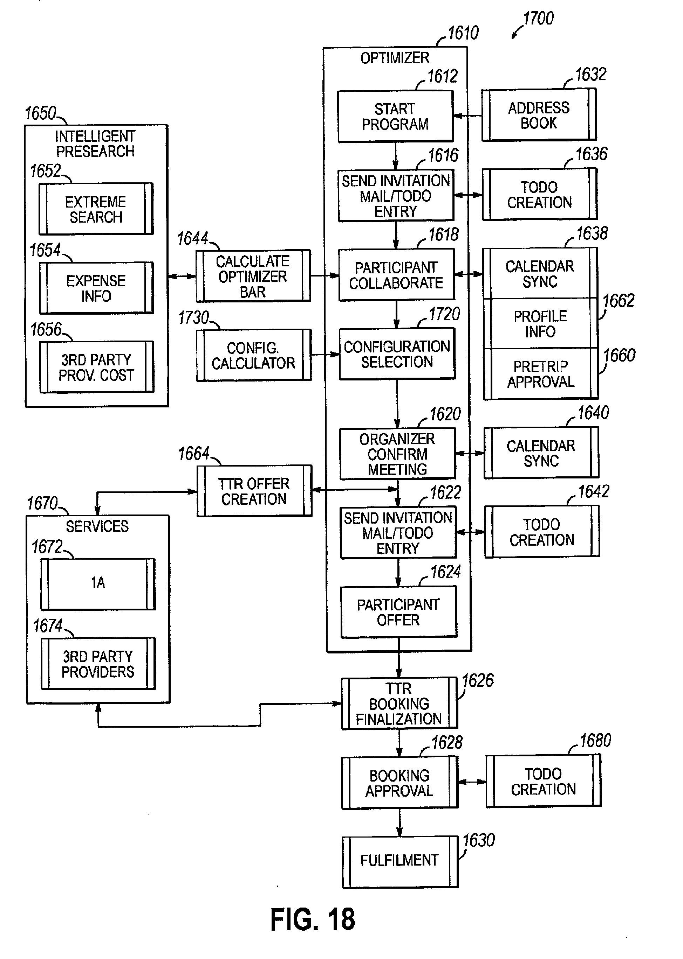

Figure 18 illustrates a process 1700 in accordance with an alternative embodiment of the invention in which like reference numerals refer to like features from the optimization process 1600 shown in Figure 17. Process 1700 differs from optimization process 1600 in that:
(1) the optimizer bar calculation 1644 is provided to the event optimizer 1610 during the collaboration step 1618 rather than during organizer scheduling step 1614, which is omitted along with calendar synchronization 1634;
(2) the pre-trip approval and profile information steps 1660, 1662 are integrated with the calendar synchronization step 1638 so that this data is provided to the optimizer 1710 in the participant collaboration step 1618; and
(3) a configuration selection step 1720 is added between the participant collaboration step 1618 and the organizer confirmation step 1620. Information may be received by the optimizer 1710 from a configuration calculator 1730 during the configuration selection step 1720.

For embodiments of the invention in which the calendar synchronization step 1638 is associated with the pre-trip approval and profile information steps 1660, 1662, the pre-trip approval step 1660 may be a non-optional feature. In addition, the total travel record offer update 1666 may be omitted.

### Examples of the system in operation are provided below.

### Example 1: Start Event Optimizer Query

The following description may apply to an "availability module" that is a "primary" module, meaning that the module is not part of a parent module. As a pre-condition for submitting an event optimizer query, the user (e.g., the event organizer) may need to be logged onto the event management system 18. Post-conditions, or results, comprise the query being sent with all mandatory elements present as described below. For secondary use cases, the selection made by the participants (use case 1a), the meeting reason (use case 1b) and the location selection (use case 1 c) may need to be entered. An example of use case 1 a is given below.

The user may start an event optimizer query using the quick search element on the system dashboard. The quick search query may include of the following elements:
(1) a date range selector to select a "to" and a "from" date;
(2) a participants selector to add participants (use case 1 a);
(3) a meeting reason selector to specify a meeting reason (use case 1 b);
(4) a duration field to define a meeting duration;
(5) a location selector to select a specific meeting location (use case 1 c); and
(6) services radio buttons to select travel, video-conferencing, and web meeting options.

The user may also define the following search criteria: the number of participants, the number of days over which the event is to occur; the services required; and the reason for the meeting. In an embodiment of the invention, these search criteria may be mandatory, in which case it would not be possible for the user to skip entering these elements. The elements may also have minimum and maximum allowable values. Exemplary ranges may include a minimum of one and a maximum of ten participants, a minimum of one and a maximum of five days for the event duration, a minimum of one and a maximum of three required services for the event with the default being that all three options are selected, and a minimum of one reason for the meeting.

In addition, the user may define the following optional search criteria: the duration (e.g., a minimum of one hour and a maximum of five days, with a default value of two hours, the unit of measure being either hours or days), and the location (e.g., the meeting location coordinates or address). Selecting or otherwise activating a "start search" button may start the search.

For a secondary use, such as a selection made by a participant, the module may still be "availability", but the module type may be "secondary". That is, the parent is the main query - in this case, use case 1. Again, the pre-condition is that the user is logged onto the system and the post-condition or outcome is that the participants have been selected. Related use cases include the users directory (use case X); external participant list (use case Y); and adding an external participant (use case Ya).

The user may select a plurality of participants for the event. Depending on the type of event, the number of participants may be limited to a maximum number, such as the aforementioned 10 participants for a meeting. The selection can be made from a directory of employees or staff (e.g., a corporate directory, contact list, or address book maintained by the personal information management application) and/or an external participant list. Other personnel may also be added to the external participant list. For example, the participant selection could be made by:
(1) scrolling through the directory of employees or staff and the external participants list;
(2) searching the directory; and/or
(3) adding a new participant to the external participants list. The user may also be able to determine which people in the directory have shared their agenda.

### Example 2: Free Slot Finder

In this example, the module, type, and parent are the same as given above in Example 1. However, the pre-conditions are the search criteria defined by the user with the post-conditions (or results) being the free agenda time slots returned. That is, the search may identify common time slots that are available for each of the event participants.

The event management application 50 may consult each of the agendas of the selected participants, and return a combined free space in each of the agendas of all participants. The event management application 50 may pre-select up to three time slots within this free space with durations as defined in the user query. If there is no agenda access for a certain participant, their agenda may not be taken into account. For example, if a participant is not connected to the same calendaring system as used by the event management application 50, or cannot share their agenda for other reasons, their agenda may be ignored. In addition, the chosen time slots may meet at least one of the following criteria:
(1) the time slot is positioned in the middle of a free space; and/or
(2) the time slot starts on whole or half hours.

Exemplary time slot preferences may include:
(1) the time slot is not connected to a free space edge;
(2) the time slot is on Tuesday, Wednesday or Thursday; and/or
(3) time slots for different event proposals are on different days.

If more than three time slots match, the system may randomly select three of the available time slots for display to the user (e.g., the event organizer) to limit the options displayed to a manageable level. The event management application 50 may also provide the user with information indicating which blocked space is blocked the agenda of each user.

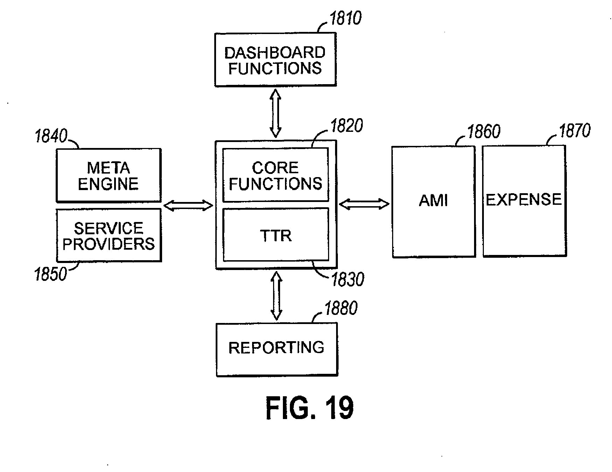

Figure 19 illustrates a relationship between various internal and external components that may be involved in the event management process. Core functions 1820 and a total travel record 1830 may comprise a central module that links the dashboard functions 1810 described above with reference to Figures 10 to 15, a meta engine 1840 and service providers 1850, an Account Management Interface (AMI) 1860 and an expense module 1870, and a reporting module 1880. Similarly as described above with respect to the expense recording and expense reporting modules 52, 54 of Figure 4, the expense and reporting modules 1870, 1880 may be optional extensions to the event management system 18.

Each dashboard may configurable, and can differ in accordance with the type of user. For example, the dashboards may be configured in accordance with corporate policy by a system administrator and also to a limited extent by the user. For example, a navigation tree may be provided with interactive elements that show data by way of small applications with limited functionality, commonly referred to as widgets. A quick search may be carried out to start the optimizer flow. Administrative control may activate and/or deactivate features in accordance with user type. Available dashboard features may include:
(1) start event optimizer flow;
(2) navigation tree with access to fast track options for flights, hotels, cars, video-conferencing, profiles, travel templates, administration and help;
(3) tasks including a list of upcoming tasks, for example, confirmed arrangements (event has been approved and all related services confirmed), pending arrangements (those that are not yet approved or that contain services which have not yet been confirmed), completed arrangement (completed but expenses not yet added), items to be approved, and items to be arranged;
(4) a reporting widget with key performance indicators; and
(5) a budget widget with key performance indicators.

One step of event planning may be a search and evaluation of the different options and cost associated with the event. Depending on the event type, corporate policy may provide automated rules on the flexibility for the different options being investigated, calculating and returning the total cost of the event for each option, along with the number of hours travelled. The system may return proposals based on parameters so that the event organizer can select one or several suitable options. For instance, an internal meeting option may consider video-conference versus travel to the event, and several possible dates and locations for the event. In contrast, a client meeting may be more restrictive, and an interview or a relocation trip may be location fixed but allow flexibility on dates.

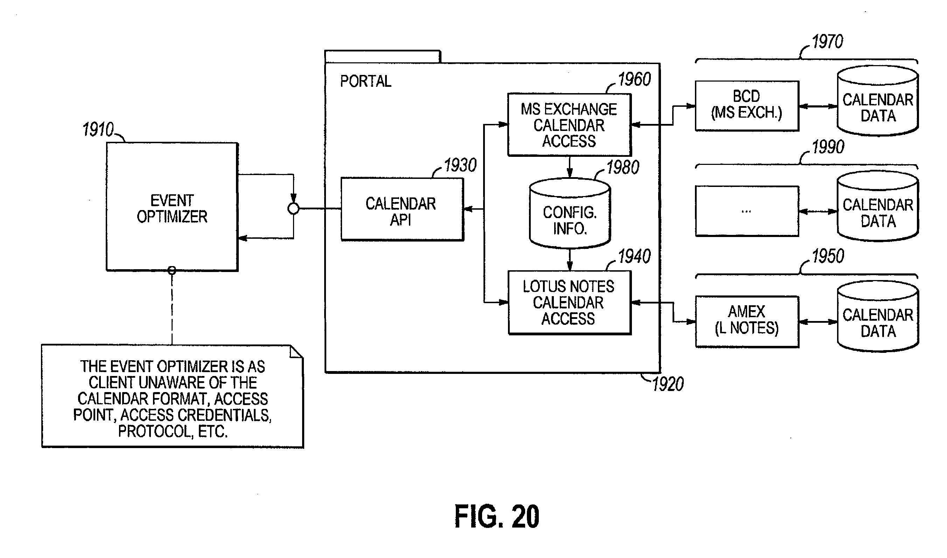

Embodiments of the present invention may interact with calendar systems of the participants as shown in Figure 20. However, the event optimizer 1610 may be unaware of the type of calendar system used by the participants. To address this issue, the event optimizer 1610 may connect to a portal 1920 which includes a calendar API 1930 connecting and consolidating calendar information. Information may be consolidated from, for example, IBM Lotus Notes@ (available from International Business Machines Corporation, Armonk, New York, USA) by access point 1940 and associated systems 1950, and from Microsoft Exchange@ by access point 1960 and associated systems 1970. Configuration information 1980 may be used to convert Microsoft Exchange@ calendar access into IBM Lotus Notes@ calendar access as shown. Persons having ordinary skill in the art will recognize that other calendar systems 1990 may also be connected to the portal 1920. In addition, although the Microsoft Exchange@ calendar access is described above as being converted into IBM Lotus Notes@ calendar access, it will be appreciated that the conversion could be made the other way around, that is, from IBM Lotus Notes@ to Microsoft Exchange@, or to any other suitable calendaring system or personal information management application which is set as the default for the event management system 18.

In accordance with an embodiment of the invention, the event management system 18 may provide for the generation of automatic offers enabling travel agencies to store and exchange travel proposals with travellers via a central, cross-channel facility outside of the corporate environment. In this embodiment, the travel functionality of the event management application 50 may be the only part of the event management system 18 that is utilized. These processes may replace time-consuming workarounds, and thereby deliver productivity gains while reducing the average time spent on trip management. Offers may be created and stored manually by a travel agent in a single PNR, and the user notified that offers are ready. Real time offer information with status may be displayed by the event management system 18. Once validated, a proposed travel offering may be confirmed into a booking in a single transaction. However, the ability to create and store these offers automatically without manual intervention may provide a considerable advantage as users may not need to perform external searches. The users may also have real time information on an offer with respect to price changes and other variable parameters. In this case, the cached data in the intelligent pre-search may be updated on a more regular basis than once a day.

The event management system 18 may integrate or otherwise inter-operate with the external third party services and/or systems 16. Examples of third party systems may include, but are not limited to, a video-conferencing system, a meeting management system, social media providers, security tools to ensure corporate security during a business meeting, and other services related to business meetings and travel. A system user may need to provide information which can be used by external third party services to enable a booking to be made. Such information may include origin/destination data, dates (and reason if appropriate), duration, traveller (including type, number of travellers, profile of the traveller), event organizer (if applicable), cost centres, or any other suitable data. The information collected may not be limited to information necessary for the booking to be made, but may include information that could be used to check policy requirements of a corporation using the event management system 18.

Before booking options that include third party services, the third party systems 16 may need to provide information relating to the available service and the cost for the service. The event management system 18 may also need to be able to record and show the total trip price, including any additional services. In this way, the total trip price and/or video-conferencing costs may be made available to the optional expense recording and expense reporting modules 52, 54 of event management application 50.

Third party service providers may also be required to provide a guarantee that the services have been correctly booked. For example, third party systems 16 may document creation of the booking with a confirmation number that can be retrieved through event management system 18. In addition, the third party service providers may be integrated into event management system 18 so that they can invoice directly for costs, and the information can be directly entered into expense management and reporting systems.

As described above, the event management system 18 may allow users to connect to aspects of the system including interfaces with third party service suppliers using a single login so that everything can be done through event management system 18. In addition, widgets may be used for each of the system and/or third party functions. These widgets may be displayed on the home page. For example, a widget may be included on the home page that provides key performance indicators giving an overview of the budget status. In addition, a quick search option may be provided to provide information about destinations, corporations, or any other travel or event related feature. Important messages may be displayed, for example, giving information relating to changes to current policy, travel restrictions, or other important changes. Links to profiles and templates may also be provided, but may be controlled by administrative rights. The event management system 18 may also synchronize the user profiles with the different modules in real-time.

As described above with reference to Figures 17 and 18, an extreme search module 1652 may be provided in which travellers can search for inspiration, specify their own preferences for dates and/or price, find personalized recommendations based on their unique interests, and look up destinations displayed without limitation. While the extreme search module 1652 may be limited in a corporate environment, the extreme search functionality may be used in an unlimited manner by travel management companies outside the corporate environment to inspire travellers with new possible destinations.

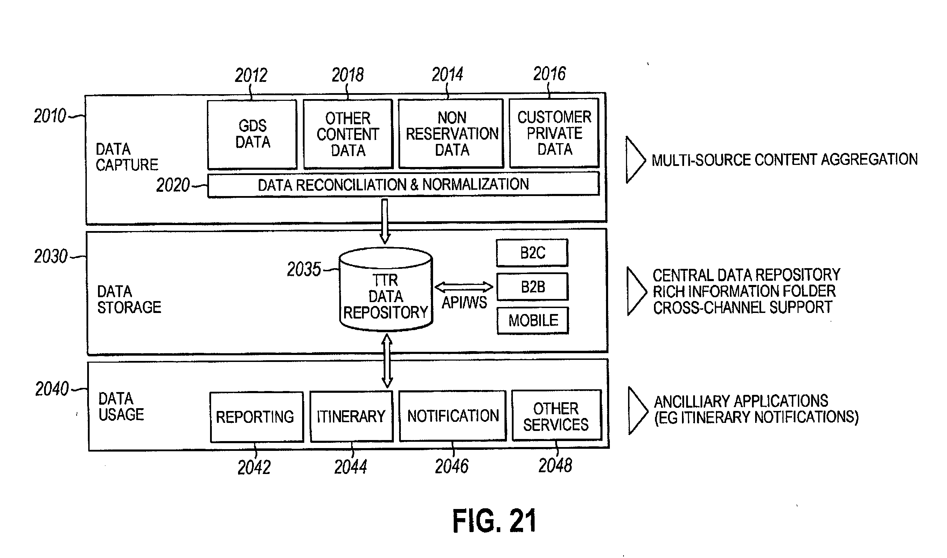

Referring now to Figure 21, a block diagram of the total travel record module 64 is presented. As described above, the total travel record module 64 may store data and booking information from different tools and systems associated with or accessed by the event management system 18. Data aggregator module 2010 relates to data capture, and may provide multi-source content aggregation. The data aggregated may include, for example, GDS data 2012, non-reservation data 2014, customer or user private data 2016, and other content data 2018. These data inputs may be reconciled and normalized in a data reconciliation and normalization module 2020 before being transferred to a data storage module 2030.

The data storage module 2030 may comprise a central data repository or database 2035 that provides cross-channel support. The database 2035 may include at least one rich information folder. A data usage module 2040 that provides ancillary applications may comprise a reporting service module 2042, an itinerary service module 2044, a notification service module 2046, as well as an "other services" module 2048. The data usage module 2040 may interface with the database 2035 for both sending information to and receiving information from the database 2035.

The total travel record module 64 may be used to store information from different sub-systems forming part of the event management system 18 in a unique record, and allows information to be provided to both third party service suppliers and to the corporate user. This may ensure that each user has access to the same updated information.

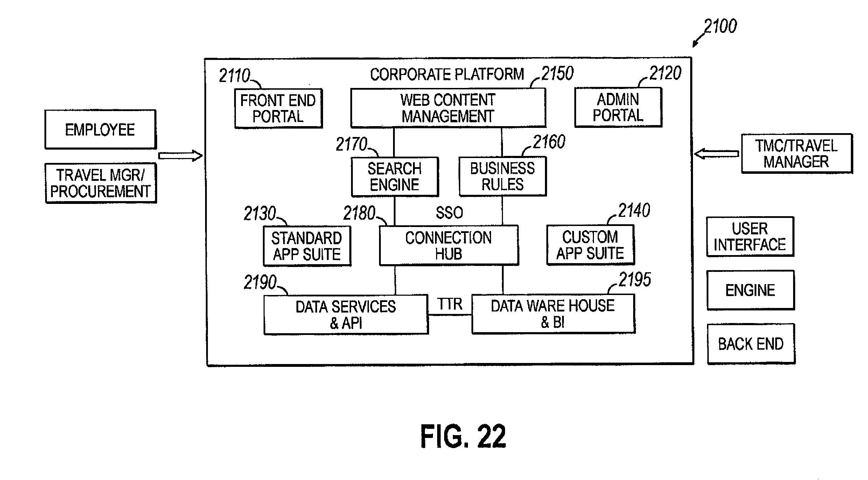

Referring now to Figure 22, a travel management system platform 2100 in accordance with an embodiment of the invention may include a front end portal 2110, an administrative portal 2120, a standard APP portal 2130, a custom APP portal 2140, a web content management module 2150, a business rules module 2160, a search engine module 2170, a connection hub module 2180, a data services and API module 2190, and a data warehouse and business intelligence module 2195. The portals 2110, 2120, 2130, 2140 may provide user interfaces, the engine modules 2150, 2160, 2170 may provide engines that manage the operation of the system platform 2100, and the back-end modules 2180, 2190, 2200 may provide or connect to other back-end services. A single sign-on may be provided for the system platform 2100 which interfaces with the portals 2110, 2120, 2130, 2140. The total travel record module 64 may interface with the back-end modules 2180, 2190, 2200 in order to exchange data with corporate back-end systems.

The front end portal 2110 may provide an interface through which a user, such as an employee or a travel manager, can access the system platform 2100. To this end, the front end portal 2110 may include user interface logic, user interface modules that provide the dashboard as described above with respect to Figures 11 to 16, and a login portal. In addition, profile management, templates, user defined content, advertisements, and messaging may be provided as part of the front end portal 2110.

The administrative portal 2120 may provide an interface through which third party service suppliers, such as travel managers, can interface with the platform. The administrative portal 2120 may also enable set-up, configuration, and personalization for corporate users. In addition, module management, back office settings, portal manager, rules, and application behaviour may be controllable through the administrative portal 2120.

The standard APP portal 2130 may have a standard suite of tools, including an e-travel management tool, a customized profile management tool, a meeting scheduler, a travel request tool, an event notifier tool, and a consolidated reporting tool. The custom APP portal 2140 may include a custom suite of tools, such as a collaborative space (using Lotus Notes and Exchange, for example), a campaign management tool, a custom reporting tool, an expense management tool, a video-conferencing tool, Meeting Incentive Congress Events (MICE) services, and a traveller care tool. Both the standard and custom APP portals 2130, 2140 may comprise interfaces internal to the system platform 2100 and interface via a connection hub provided by back-end module 2180.

Web content management module 2150 may provide a web content management tool that includes:
(1) a dynamic webstore manager;
(2) a menu, page and content manager;
(3) a media content manager;
(4) a base facts and rules module;
(5) a template tool; and
(6) a collaboration tool.

The business rules module 2160 may include modules relating to policy and pricing, partner rules for third party service suppliers, and service selector and work flow. The search engine module 2170 may manage the event optimizer tool, the intelligent pre-search tool, the extreme search tool, a master pricer tool, metadata structure, and third party suppliers.

Back-end module 2180 may comprise a connection hub that manages some or all connections within the system platform 2100, including message queuing and integration of applications. Back-end element 2190 relates to data services and API, and may include master data management tools; a community tool; rules and policy tools; a cost distribution tool; a payment tool; a profile tool; and an integration tool. Back-end element 2195 may manage data warehouse information. To this end, back-end element 2195 may include import and synchronization services, web analytics tools, a reporting tool, a billing counter, a business intelligence tool, and data versioning tools.

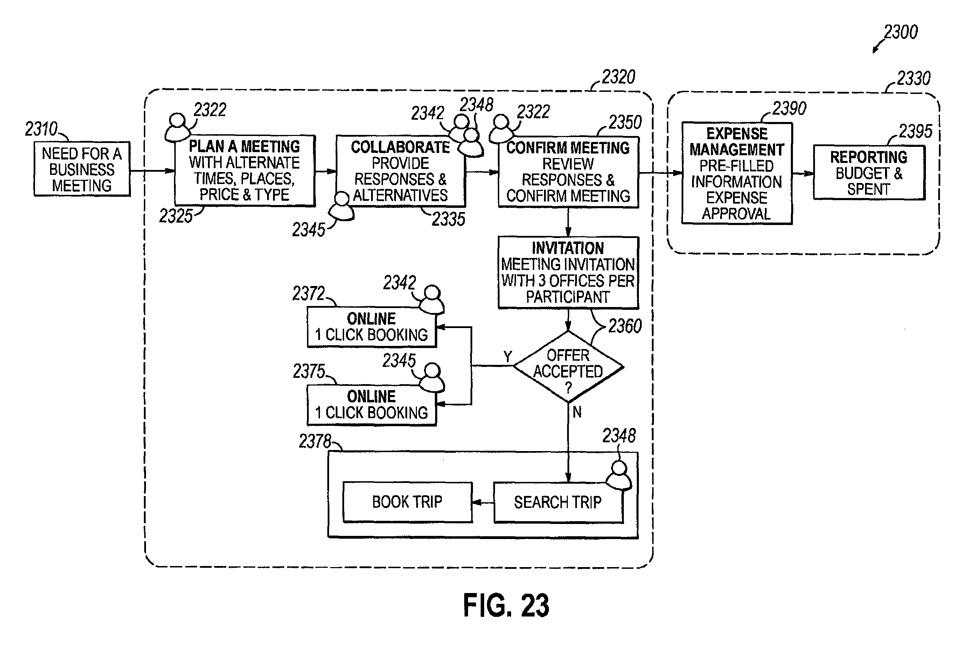

Referring now to Figure 23, a flow chart of a process 2300 for the booking of an event in accordance with the present invention includes a pre-event phase 2320 and a post-event phase 2330. In block 2310, a need for an event (e.g., a business meeting) is identified. Once this need is identified, the event may be managed in accordance with the pre-event phase 2320 and post-event phase 2330.

In the pre-event phase 2320, the event may be assigned to an event organizer 2322. The event organizer 2322 may be in charge of creating and managing the event. To create the event, the event organizer 2322 may plan the event as indicated by block 2325. This planning may include logging onto the event management system 18, and providing data relating to the event as described above with respect to Figures 11 to 16. This data may include data defining the event, such as a plurality of dates on which the event may be held, the desired participants, times for the event, and/or places where the event may be held. The event management application 50 may then send out event options to each of the participants.

In block 2335, the participants 2342, 2345, 2348 may receive the options in the form of invitations to attend the event that include multiple event options. In response, the participants 2342, 2345, 2348 may provide feedback in the form of responses that rate the options as most preferred (e.g., by responding "best"), acceptable (e.g., by responding "yes"), or unacceptable (e.g., by responding "no"). The event management system 18 may thereby effectively provide for collaboration between the participants and event organizer. That is, the event management system 18 may actively involve each participant 2342, 2345, 2348 in the selection of an optimal arrangement for the event.

After the participants 2342, 2345, 2348 have responded to the invitations, the pre-event phase 2320 may proceed to block 2350 where the event may be confirmed by the event organizer 2322. This confirmation may be based on the responses provided by each participant during the collaboration that occurred in block 2335. In block 2360, the confirmation may be received by each participant 2342, 2345, 2348 together with at least one offer that enables the participant to attend the event as indicated by 2360. Each participant 2342, 2345, 2348 may be provided the option of booking one of the offers by a single click. In the illustrated example, participants 2342, 2345 book one of the offers in blocks 2372, 2375, respectively. However, participant 2348 proceeds to block 2378 and takes the option of doing his or her own research and booking. Corporate employees may typically select one of the offers presented rather than searching for and booking their own travel. However, in instances where one of the participants is an external party, or where a corporate employee has specific needs, the participant may have to make their own booking as shown at 2378. Thus, embodiments of the invention may support participants searching for and booking their own event itineraries.

Once the services associated with the event and the participant options have been booked, the process 2300 may proceed to block 2390 of the post-event phase 2330. At the time that the event is confirmed, basic data may be used to populate the post-event phase 2330. This data may include, for example, details of expenses ready for expense approval. In block 2390, this data may be received, for example, by the expense recording module 52 of event management application 50. This information may be updated once the booking has been made, or whenever an event related expense is incurred. In block 2395, the expenses may be processed for reporting with budgeting information. This processing may be performed by the expense reporting module 54 of event management application 50.

Thus, embodiments of the invention may provide a more efficient event management process that encapsulates budgetary restraints or restrictions as these are indicated, where appropriate, in the offer as described above. It will be appreciated that each of the elements relating to the booking of an event, such as travel, video-conferencing, expenses, and reporting can also be implemented separately without having to implement all the elements described above.

Persons having ordinary skill in the art would understand that the program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

It will be appreciated that each of the elements relating to the booking of an event, such as, travel, videoconferencing, expenses, reporting etc., can also be implemented separately without having to implement all the elements described above.

Although the present invention has been described with reference to specific embodiments, it will be appreciated that the event management system of the present invention can be implemented in other ways without departing from the present invention.

## Claims

1. An event optimizer tool for managing the organization of an event to create at least one booking for participants to the event in accordance with criteria relating to best method, best place and best time, the event optimizer tool comprising:-
a meeting creation module operable for creating an event for participants to the event based on the availability of each participant, the meeting creation module proposing at least one option for the event to the participants;
a participant interaction module operable for receiving the options from the meeting creation module and for providing each participant with information relating to each option for the event, for receiving feedback from each participant indicative of preferences for each option for the event, and for selecting one option for all participants in accordance with the received feedback; and
an offer module operable for receiving the selected option from the participant interaction module and providing at least one participant offer for each participant in accordance with the selected option.

2. An event optimizer tool according to claim 1, wherein each participant offer comprises arrangements relating to the event and includes at least one of: travel information and videoconferencing information.

3. An event optimizer tool according to claim 2, wherein each participant offer further comprises costs associated with the arrangements for the event.

4. An event management system including a hosted platform, the hosted platform comprising:-
a front end including at least one user interface;
at least one search engine interfacing with said front end;
an event optimizer tool for managing the organization of an event to create at least one booking for participants to the event in accordance with criteria relating to best method, best place and best time, the event optimizer tool comprising:-
a meeting creation module operable for creating an event for participants to the event based on the availability of each participant, the meeting creation module proposing at least one option for the event to the participants;
a participant interaction module operable for receiving the options from the meeting creation module and for providing each participant with information relating to each option for the event, for receiving feedback from each participant indicative of preferences for each option for the event, and for selecting one option for all participants in accordance with the received feedback; and
an offer module operable for receiving the selected option from the participant interaction module and providing at least one participant offer for each participant in accordance with the selected option; and
a back end interfacing with said at least one search engine and the event optimizer tool to provide application integration.

5. An event management system according to claim 4, wherein each participant offer comprises arrangements relating to the event and includes at least one of: travel information, videoconferencing information, and costs associated with the arrangements for the event.

6. An event management system according to claim 4 or 5, wherein said at least one search engine comprises an intelligent pre-search module.

7. An event management system according to claim 6, wherein the intelligent pre-search module includes an extreme search module providing information relating to options for an event to be managed.

8. An event management system according to any one of claims 4 to 7, further comprising a plurality of modules each of which comprises an application associated with event management, each of said said plurality of modules comprising one of: an online booking tool; a customized profile management application; a meeting scheduler application; a travel request tool; a collaborative space application; a videoconferencing application; an event notifier application; a consolidated reporting application; a custom reporting application; and an expense management application.

9. A method of managing the organization of an event to create at least one booking for participants to the event in accordance with criteria relating to best method, best place and best time, the method comprising the steps of:
a) proposing at least one option for the event to the participants;
b) inter acting with the participants to provide each participant with information relating to each option for the event and for receiving feedback from each participant indicative of preferences for each option for the event;
c) selecting one option for all participants in accordance with the received feedback; and
d) providing at least one participant offer for each participant in accordance with the selected option.

10. A method according to claim 9, wherein each participant offer comprises providing arrangements relating to the event and includes at least one of: travel information, videoconferencing information, and costs associated with the arrangements for the event.

11. A method of event management on a hosted platform, the hosted platform comprising at least an event optimizer tool for managing the organization of an event to create at least one booking for participants to the event in accordance with criteria relating to at least one of best method, best place and best time, the event optimizer tool comprising a meeting creation module operable for creating an event for participants to the event based on the availability of each participant, the meeting creation module proposing at least one option for the event to the participants; a participant interaction module operable for receiving the options from the meeting creation module and for providing each participant with information relating to each option for the event, for receiving feedback from each participant indicative of preferences for each option for the event, and for selecting one option for all participants in accordance with the received feedback; and an offer module operable for receiving the selected option from the participant interaction module and providing at least one participant offer for each participant in accordance with the selected option, the method comprising the steps of:
a) planning an event for a number of participants;
b) searching for proposals for the event;
c) collaborating with each of the participants to indicate their preference for each of the proposals for the event;
d) selecting a proposal based on the preferences of the participants; and
e) proposing at least one participant offer for each individual participant based on the option selected in accordance with at least one of: best method, best time and best location.

12. A method according to claim 11, wherein step e) comprises indicating whether each participant offer is within policy.

13. A method according to claim 11 or 12, further comprising the step of:
f) for each individual participant, selecting a preferred participant offer to participate in the event.

14. A method according to any one of claims 11 to 13, further comprising the step of:
g) recording expenses of individual participants for the event.

15. A method according to any one of claims 11 to 14, further comprising the step of:-
h) reporting total costs for the event.
